(19) Europäisches Patentamt / European Patent Office / Office européen des brevets

(11) **EP 4 322 110 A1**

(12) **EUROPEAN PATENT APPLICATION**

(43) Date of publication:
**14.02.2024 Bulletin 2024/07**

(21) Application number: **23150296.4**

(22) Date of filing: **04.01.2023**

(51) International Patent Classification (IPC):
**G06T 9/00** (2006.01)    **H04N 19/597** (2014.01)
**H04N 19/70** (2014.01)

(52) Cooperative Patent Classification (CPC):
**H04N 19/597; G06T 9/001; H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022 JP 2022127632**

(71) Applicant: **Sharp Kabushiki Kaisha
Sakai-shi
Osaka 590-8522 (JP)**

(72) Inventors:
- **TOKUMO, Yasuaki
  Sakai City, Osaka, 590-8522 (JP)**
- **TAKADA, Keiichiro
  Sakai City, Osaka, 590-8522 (JP)**
- **IKAI, Tomohiro
  Sakai City, Osaka, 590-8522 (JP)**
- **CHUJOH, Takeshi
  Sakai City, Osaka, 590-8522 (JP)**
- **AONO, Tomoko
  Sakai City, Osaka, 590-8522 (JP)**

(74) Representative: **Müller Hoffmann & Partner
Patentanwälte mbB
St.-Martin-Strasse 58
81541 München (DE)**

(54) **3D DATA DECODING APPARATUS AND 3D DATA CODING APPARATUS**

(57)     Object
To reduce distortion caused by coding a mesh displacement image, and code and decode 3D data with high quality in coding and decoding 3D data using video coding scheme.
Solution
A 3D data decoding apparatus for decoding 3D coded data includes an image decoder configured to decode the 3D coded data into a mesh displacement image, a displacement unmapping unit configured to generate a mesh displacement from the mesh displacement image, and a coordinate system conversion unit configured to perform conversion of a coordinate system of the mesh displacement.

FIG. 5

**EP 4 322 110 A1**

**Description**

Technical Field

Embodiments of the present invention relate to a 3D data coding apparatus and a 3D data decoding apparatus.

Background Art

In order to efficiently transmit or record 3D data, there are a 3D data coding apparatus that converts 3D data into a two-dimensional image and codes the image in a video coding scheme to generate coded data, and a 3D data decoding apparatus that decodes the coded data into the two-dimensional image and reconstructs the 3D data.
Specific 3D data coding schemes include, for example, MPEG-I Volumetric Video-based Coding (V3C) and Video-based Point Cloud Compression (V-PCC) (NPL 1). The V3C can code and decode multi-view video besides point cloud composed of positions and attribute information of points. Existing video coding schemes include, for example, H.266/Versatile Video Coding (VVC), H.265/High Efficiency Video Coding (HEVC), and the like.

Citation List

Non Patent Literature

NPL 1
ISO/IEC 23090-5
NPL 2
[V-CG] Apple's Dynamic Mesh Coding CfP Response, ISO/IEC JTC 1/SC 29/WG 7 m59281, April 2022
NPL 3
[V-GC] Report of experiments coordinate system for displacements, ISO/IEC JTC 1/SC 29/WG 7 m60215, July 2022

Summary of Invention

Technical Problem

The 3D data coding scheme in NPL 1 codes and decodes a geometry (a depth image) or an attribute (a color image) constituting 3D data (point cloud) by using a video coding scheme such as HEVC and VVC. The 3D data coding scheme in NPL 2 codes and decodes a geometry (a base mesh, a mesh displacement (a mesh displacement array, a mesh displacement image)) and attributes (a texture mapping image) constituting 3D data (mesh) by using a vertex coding scheme such as Draco, and a video coding scheme such as the HEVC and the VVC. An experimental result is shown that performance changes depending on experimental conditions in a case of coding/decoding a mesh displacement image using the video coding scheme disclosed in NPL 2 (NPL 3). A conceivable problem is that distortion caused by coding a mesh displacement allocated to each component of an image decreases accuracy of 3D data to be reconstructed, and the distortion depends on coordinate system.
The present invention has an object to reduce distortion caused by coding a mesh displacement image, and code and decode 3D data with high quality in coding and decoding 3D data using video coding scheme.

Solution to Problem

In order to solve the above problem, a 3D data decoding apparatus according to an aspect of the present invention is a 3D data decoding apparatus for decoding coded data, the 3D data decoding apparatus including an image decoder configured to decode the coded data into a mesh displacement image, a displacement unmapping unit configured to generate a mesh displacement from the mesh displacement image, and a coordinate system conversion unit configured to convert a coordinate system of the mesh displacement.
In order to solve the above problem, a 3D data coding apparatus according to an aspect of the present invention is a 3D data coding apparatus for coding 3D data, the 3D data coding apparatus includes a coordinate system conversion unit configured to convert a coordinate system of a mesh displacement, a displacement mapping unit configured to generate a mesh displacement image from the mesh displacement, and an image coder configured to code the mesh displacement image.

Advantageous Effects of Invention

According to one aspect of the present invention, it is possible to reduce distortion caused by coding a mesh displacement image, and code and decode 3D data with high quality.

Brief Description of Drawings

FIG. 1 is a schematic diagram illustrating a configuration of a 3D data transmission system according to the present embodiment;
FIG. 2 is a diagram illustrating a hierarchical structure of data of a coding stream;
FIG. 3 is a functional block diagram illustrating a schematic configuration of a 3D data decoding apparatus 31;
FIG. 4 is a functional block diagram illustrating a configuration of a base mesh decoder 303;
FIG. 5 is a functional block diagram illustrating a configuration of a mesh displacement decoder 305;
FIG. 6 is a functional block diagram illustrating a configuration of a mesh reconstruction unit 307;
FIG. 7 is an example of a syntax of a configuration for transmitting coordinate system conversion parameters and displacement mapping parameters in a sequence level (an ASPS);
FIG. 8 is an example of a syntax of a configuration for transmitting coordinate system conversion parameters and displacement mapping parameters in a picture/frame level (an AFPS);
FIG. 9 is an example of a syntax of a configuration for transmitting coordinate system conversion parameters and displacement mapping parameters in a tile/patch level;
FIG. 10 is a diagram for illustrating an operation of a displacement unmapping unit 3052;
FIG. 11 is a diagram for illustrating an operation of the mesh reconstruction unit 307;
FIG. 12 is a functional block diagram illustrating a schematic configuration of a 3D data coding apparatus 11;
FIG. 13 is a functional block diagram illustrating a configuration of a base mesh coder 103;
FIG. 14 is a functional block diagram illustrating a configuration of a mesh displacement coder 107;
FIG. 15 is a functional block diagram illustrating a configuration of a mesh separator 115;
FIG. 16 is a diagram for describing an operation of the mesh separator 115; and
FIG. 17 is an example of a syntax of a configuration for transmitting coordinate system conversion parameters and displacement mapping parameters in a sequence level (an ASPS).

Description of Embodiments

Hereinafter, an embodiment of the present invention will be described with reference to the drawings.

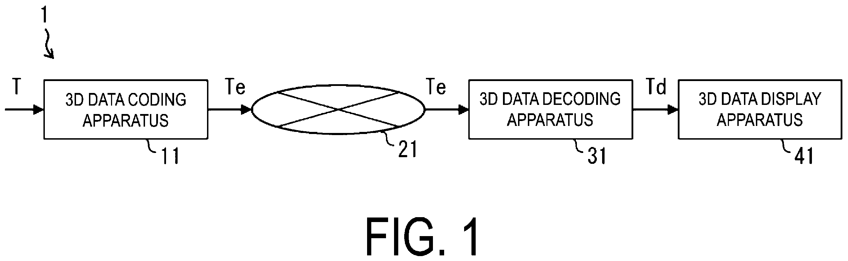

FIG. 1 is a schematic diagram illustrating a configuration of a 3D data transmission system 1 according to the present embodiment.
The 3D data transmission system 1 is a system in which a coding stream obtained by coding a coding target 3D data is transmitted, the transmitted coding stream is decoded, and thus the 3D data is displayed. The 3D data transmission system 1 includes a 3D data coding apparatus 11, a network 21, a 3D data decoding apparatus 31. and an 3D data display apparatus 41.
A piece of 3D data T is input to the 3D data coding apparatus 11.
The network 21 transmits a coding stream Te generated by the 3D data coding apparatus 11 to the 3D data decoding apparatus 31. The network 21 is the Internet, a Wide Area Network (WAN), a Local Area Network (LAN), or a combination thereof. The network 21 is not necessarily limited to a bidirectional communication network, and may be a unidirectional communication network configured to transmit broadcast waves of digital terrestrial television broadcasting, satellite broadcasting of the like. The network 21 may be substituted by a storage medium in which the coding stream Te is recorded, such as a Digital Versatile Disc (DVD: trade name) or a Blu-ray Disc (BD: trade name).
The 3D data decoding apparatus 31 decodes each of the coding streams Te transmitted from the network 21 and generates one or multiple pieces of decoded 3D data Td.
The 3D data display apparatus 41 displays all or part of one or multiple pieces of decoded 3D data Td generated by the 3D data decoding apparatus 31. For example, the 3D data display apparatus 41 includes a display device such as a liquid crystal display and an organic Electro-Luminescence (EL) display. Forms of the display include a stationary type, a mobile type, an HMD type, and the like. In a case that the 3D data decoding apparatus 31 has a high processing capability, an image having high image quality is displayed, and in a case that the apparatus has a lower processing capability, an image which does not require high processing capability and display capability is displayed.

Structure of Coding Stream Te

Prior to the detailed description of the 3D data coding apparatus 11 and the 3D data decoding apparatus 31 according to the present embodiment, a data structure of the coding stream Te generated by the 3D data coding apparatus 11 and decoded by the 3D data decoding apparatus 31 will be described.

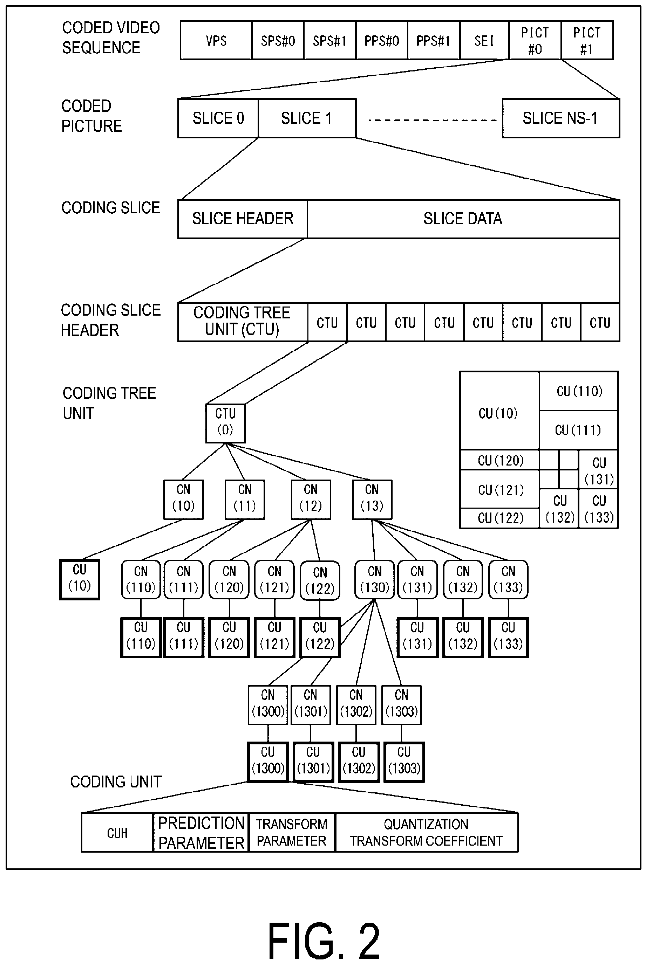

FIG. 2 is a diagram illustrating the hierarchy structure of data in the coding stream Te. The coding stream Te includes a sequence and multiple pictures constituting the sequence illustratively. FIG. 2 is a diagram illustrating each of a coded video sequence defining a sequence SEQ, a coded picture defining a picture PICT, a coding slice defining a slice S, a coding slice data defining slice data, a coding tree unit included in the coding slice data, and a coding unit included in the coding tree unit.

Coded Video Sequence

In the coded video sequence, a set of data referred to by the 3D data decoding apparatus 31 to decode the sequence SEQ to be processed is defined. As illustrated in the coded video sequence of FIG. 2, the sequence SEQ includes a Video Parameter Set, a Sequence Parameter Set SPS, a Picture Parameter Set PPS, a picture PICT, and Supplemental Enhancement Information SEI.

In the video parameter set VPS, in a video including multiple layers, a set of coding parameters common to multiple videos and a set of coding parameters associated with the multiple layers and an individual layer included in the video are defined.

In the sequence parameter set SPS, a set of coding parameters referred to by the 3D data decoding apparatus 31 to decode a target sequence is defined. For example, a width and a height of a picture are defined. Note that multiple SPSs may exist. In that case, any of the multiple SPSs is selected from the PPS.

In the picture parameter set PPS, a set of coding parameters referenced by the 3D data decoding apparatus 31 to decode each picture in a target sequence is defined. For example, a reference value (pic_init_qp_minus26) of a quantization step size used for decoding of a picture and a flag (weighted_pred_flag) indicating an application of a weight prediction are included. Note that multiple PPSs may exist. In that case, any of the multiple PPSs is selected from each picture in a target sequence.

Coded Picture

In the coded picture, a set of data referred to by the 3D data decoding apparatus 31 to decode the picture PICT to be processed is defined. As illustrated in the coded picture of FIG. 2, the picture PICT includes a slice 0 to a slice NS-1 (NS represents the total number of slices included in the picture PICT).

Coding Slice

In the coding slice, a set of data referenced by the 3D data decoding apparatus 31 to decode the slice S to be processed is defined. As illustrated in the coding slice of FIG. 2, the slice includes a slice header and slice data.

The slice header includes a coding parameter group referenced by the 3D data decoding apparatus 31 to determine a decoding method for a target slice. Slice type indication information (slice_type) indicating a slice type is one example of a coding parameter included in the slice header.

Coding Slice Data

In the coding slice data, a set of data referenced by the 3D data decoding apparatus 31 to decode the slice data to be processed is defined. The slice data includes CTUs as illustrated in the coding slice header in FIG. 2.

Coding Tree Unit

In the coding tree unit of FIG. 2, a set of data referenced by the 3D data decoding apparatus 31 to decode the CTU to be processed is defined. The CTU is split into coding unit CUs, each of which is a basic unit of coding processing, by a recursive Quad Tree split (QT split), Binary Tree split (BT split), or Ternary Tree split (TT split).

Coding Unit

As illustrated in the coding unit of FIG. 2, a set of data referred to by the 3D data decoding apparatus 31 to decode the coding unit to be processed is defined. Specifically, the CU includes a CU header CUH, a prediction parameter, a transform parameter, a quantization transform coefficient, and the like. In the CU header, a prediction mode and the like are defined.

There are two types of predictions (prediction modes), which are intra prediction and inter prediction. The intra prediction refers to a prediction in an identical picture, and the inter prediction refers to prediction processing performed between different pictures (for example, between pictures of different display times, and between pictures of different layer images).

Transform and quantization processing is performed in units of CU, but the quantization transform coefficient may be subjected to entropy coding in units of subblock such as 4 x 4.

Configuration of 3D Data Decoding Apparatus according to First Embodiment

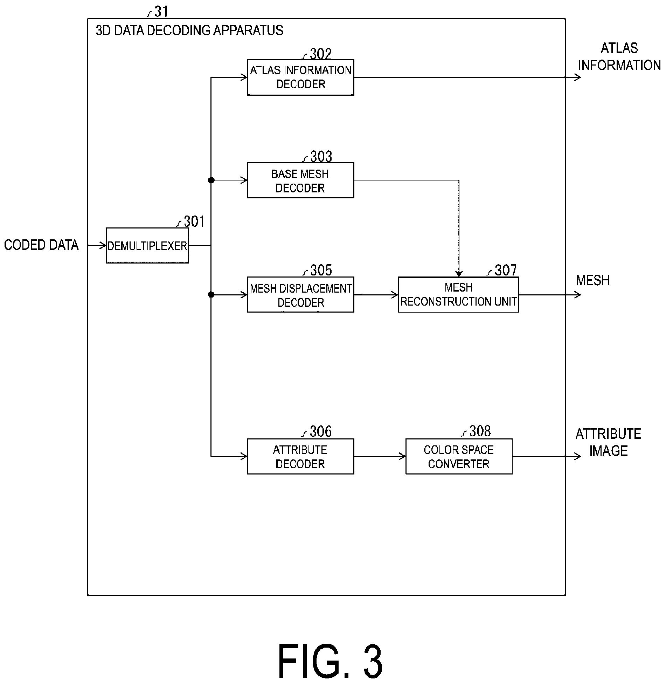

FIG. 3 is a functional block diagram illustrating a schematic configuration of the 3D data decoding apparatus 31 according to a first embodiment. The 3D data decoding apparatus 31 includes a demultiplexer 301, an atlas information decoder 302, a base mesh decoder 303, a mesh displacement decoder 305, a mesh reconstruction unit 307, an attribute decoder 306, and a color space converter 308. The 3D data decoding apparatus 31 receives input of coded data of 3D data, and outputs atlas information, a mesh, and an attribute image.

The demultiplexer 301 receives input of coded data multiplexed in a byte stream format, an ISOBMFF (ISO Base Media File Format), and the like, and demultiplexes the coded data to output an atlas information coding stream, a base mesh coding stream, a mesh displacement image coding stream, and an attribute image coding stream.

The atlas information decoder 302 receives the input of atlas information coding stream output from the demultiplexer 301, and decodes the atlas information.

The base mesh decoder 303 decodes the base mesh coding stream coded in a vertex coding (3D data compression coding scheme, e.g., Draco), and outputs a base mesh. The base mesh will be described later.

The mesh displacement decoder 305 decodes the mesh displacement image coding stream coded in VVC, HEVC, or the like, and outputs a mesh displacement.

The mesh reconstruction unit 307 receives the input of base mesh and mesh displacement, and reconstructs a mesh in a 3D space.

The attribute decoder 306 decodes the attribute image coding stream coded in VVC, HEVC, or the like, and outputs an attribute image in a YCbCr format. The attribute image may be a texture image along the UV axes (a texture mapping image that is converted in a UV atlas scheme).

The color space converter 308 performs color space conversion on the attribute image from the YCbCr format to an RGB format. Note that the attribute image coding stream coded in the RGB format may be decoded, and the color space conversion may be omitted.

Decoding of Base Mesh

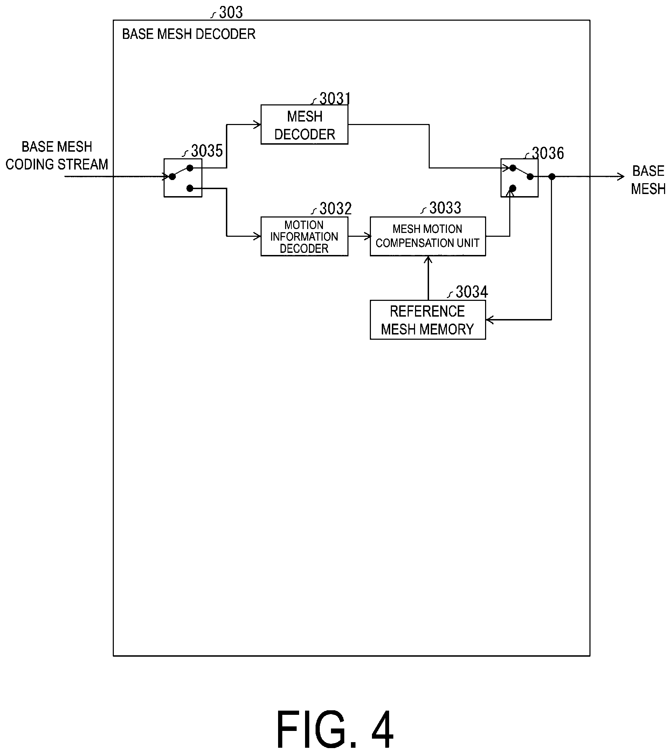

FIG. 4 is a functional block diagram illustrating a configuration of the base mesh decoder 303. The base mesh decoder 303 includes a mesh decoder 3031, a motion information decoder 3032, a mesh motion compensation unit 3033, a reference mesh memory 3034, a switch 3035, and a switch 3036. The base mesh decoder 303 may include a base mesh inverse quantization unit (not illustrated) in the preceding stage of the output of the base mesh. The switch 3035 and the switch 3036 connect to a side where motion compensation is not performed, in a case that a base mesh to be decoded is coded (intra-coded) without referring to another base mesh (e.g., an already coded/decoded base mesh). On the other hand, in a case that the base mesh to be decoded is coded (inter-coded) with referring to another base mesh, the switches 3035 and 3036 connect to a side where the motion compensation is performed. In a case that the motion compensation is performed, the target vertex coordinates are derived with referring to vertex coordinates and motion information already decoded.

The mesh decoder 3031 decodes the intra-coded base mesh coding stream to output the base mesh. The coding scheme to be used includes Draco or the like.

The motion information decoder 3032 decodes the inter-coded base mesh coding stream to output the motion information for each vertex of a reference mesh described below. The coding scheme to be used includes entropy coding such as arithmetic coding.

The mesh motion compensation unit 3033 performs motion compensation on each vertex of the reference mesh input from the reference mesh memory 3034 based on the motion information to output motion-compensated mesh.

The reference mesh memory 3034 is a memory that holds the decoded mesh for reference in subsequent decoding processing.

Decoding of Mesh Displacement

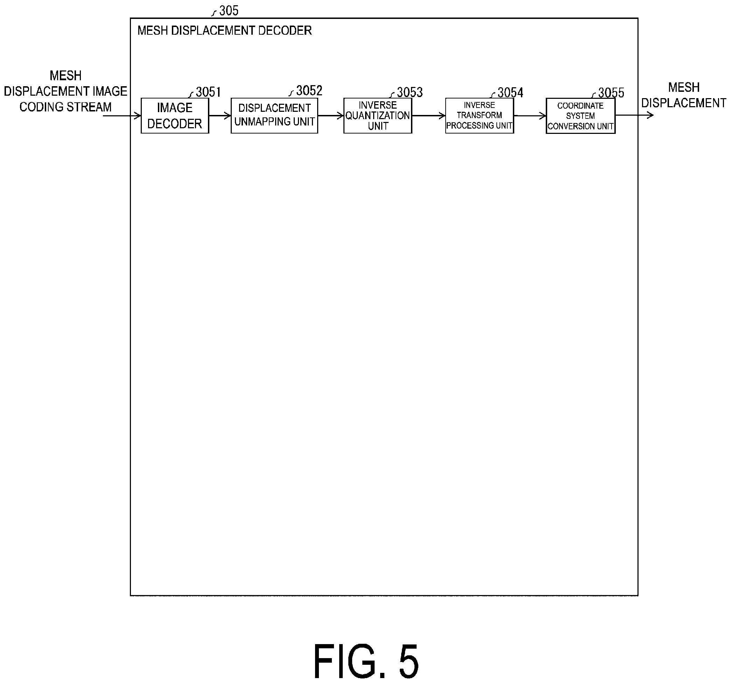

FIG. 5 is a functional block diagram illustrating a configuration of the mesh displacement decoder 305. The mesh displacement decoder 305 includes a displacement unmapping unit 3052 (an image unpacking unit, a displacement decoder), an inverse quantization unit 3053, inverse transform processing unit 3054, and a coordinate system conversion unit 3055. The displacement unmapping unit may also be referred to as a displacement mapping unit. As illustrated in the figure, the mesh displacement decoder 305 may further include an image decoder 3051, or the mesh displacement decoder 305 may be configured to use an external image decoding apparatus for decoding of a displacement image (displacement array), without including the image decoder 3051.

The image decoder 3051 included in the mesh displacement decoder 305 decodes the coordinate system conversion information (asps_vdmc_ext_displacement_coordinate_system, afps vdmc ext displacement coordinate system, pid displacement coordinate_system) indicating the coordinate system from the coded data. Displacement mapping information (asps_vdmc_ext_displacement_coordinate_system_map_idc, afps_vdmc_ext_displacement_coordinate_system_map_idc, pid_displacement_coordinate_system_map_idc) indicating the correspondence between a mesh displacement and an image component is also decoded. The displacement mapping information may be also referred to as information associating the image component with the coordinate components of the mesh displacement. Note that a gating flag may be separately provided, and each piece of the coordinate system conversion information may be decoded only in a case that the gating flag is 1. The gating flag is, for example, asps_vdmc_ext_displacement_coordinate_system_update_flag, afps_vdmc_ext_displacement_coordinate_system_update_flag, or pid_displacement_coordinate_system_update_flag.

The displacement mapping information may also be provided with a gating flag, and the displacement mapping information is decoded only in a case that the gating flag is 1. The gating flag is, for example,

asps_vdmc_ext_displacement_coordinate_system_map_flag,
afps_vdmc_ext_displacement_coordinate_system_map_flag, or
pid_displacement_coordinate_system_map_flag.

The image decoder 3051 included in the mesh displacement decoder 305 may set displacement mapping parameters at a time when the displacement mapping information is decoded.

Coordinate System

A mesh displacement (three-dimensional vector) coordinate system to be used includes the following two types of coordinate systems. Cartesian coordinate system: an orthogonal coordinate system commonly defined throughout the 3D space. (X, Y, Z) coordinate system. Orthogonal coordinate system that does not change in direction at the same time (in the same frame, in the same tile). Local coordinate system: an orthogonal coordinate system defined per region or vertex in the 3D space. Orthogonal coordinate system that may change in direction at the same time (in the same frame, in the same tile). Normal (D), tangent (U), bi-tangent (V) coordinate system. Specifically, this is an orthogonal coordinate system consisting of a first axis (D), a second axis (U), and a third axis (V), the first axis (D) being indicated by a normal vector n_vec at a vertex (or a surface including a vertex), the second axis (U) and the third axis (V) being respectively indicated by two tangent vectors t_vec and b_vec orthogonal to the normal vector n_vec. n_vec, t_vec, and b_vec are three-dimensional vectors. (D, U, V) coordinate system may be referred to as (n, t, b) coordinate system.

Decoding and Deriving of Control Parameter in Sequence Level

Here, control parameters used in the mesh displacement decoder 305 are described.

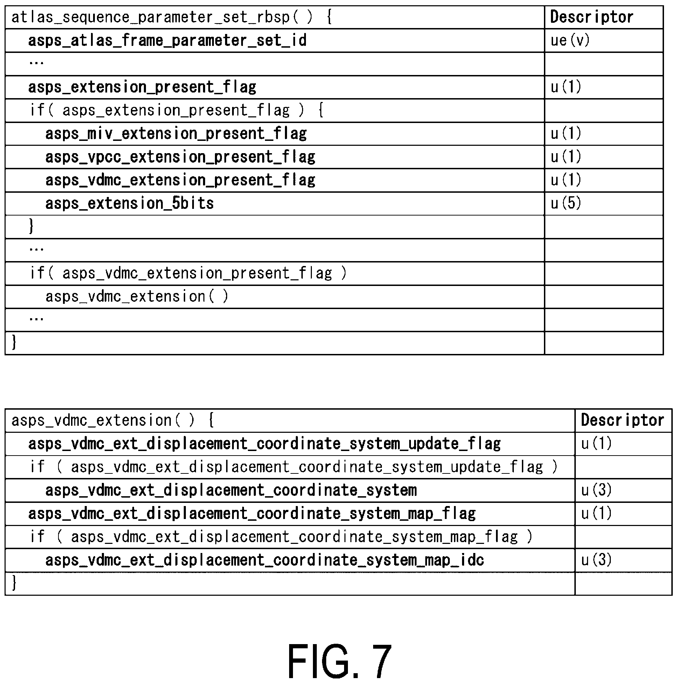

FIG. 7 is an example of a syntax of a configuration for transmitting coordinate system conversion parameters and displacement mapping parameters in a sequence level (Atlas Sequence Parameter Set (ASPS)). In the ASPS, the coordinate system conversion parameters and the displacement mapping parameters are transmitted in a syntax of asps_vdmc_extension(). Semantics of respective fields are as follows: asps_vdmc_ext_displacement_coordinate_system_update_flag: a flag indicating whether to update a mesh displacement coordinate system. In a case that the flag is equal to true (e.g., 1), the mesh displacement coordinate system is updated based on a value of asps_vdmc_ext_displacement_coordinate_system described below. In a case that the flag is equal to false (e.g., 0), the mesh displacement coordinate system is not updated. asps_vdmc_ext_displacement_coordinate_system: coordinate system conversion information indicating the mesh displacement coordinate system. In a case that the value is equal to a prescribed first value (e.g., 0), the value indicates a Cartesian coordinate system. In a case that the value is equal to a second value (e.g., 1) different from the above, the value indicates a local coordinate system. In a case that a syntax element does not appear, the value is inferred to be the first value (0) and a default coordinate system is to be the Cartesian coordinate system.

asps_vdmc_ext_displacement_coordinate_system_map_flag: a flag indicating whether to update a swap operation on a coordinate axis for the mesh displacement. In a case that the flag is equal to true, the swap operation on the coordinate axis for the mesh displacement is updated based on a value of asps_vdmc_ext_displacement_coordinate_system_map_idc described below. In a case that the flag is equal to false, the swap operation on the coordinate axis for the mesh displacement is not updated.

asps_vdmc_ext_displacement_coordinate_system_map_idc: displacement mapping information indicating the swap operation on the coordinate axis for the mesh displacement. In a case that the value is equal to 0, no swap operation is performed. In a case that the value is equal to 1, a first component and a second component of the coordinate axes are swapped with each other. In a case that the value is equal to 2, the first component and a third component of the coordinate axes are swapped with each other. Furthermore, the second component and the third component may be swapped with each other. In other words, in a case that the value is equal to 3, the second component and the third component of the coordinate axes are swapped with each other. In a case that the value is equal to 4, the first component and the second component of the coordinate axes are swapped with each other, and subsequently, the second component and the third component are swapped with each other. In a case that the value is equal to 5, the first component and the third component of the coordinate axes are swapped with each other, and subsequently, the second component and the third component are swapped with each other. In the case that a syntax element does not appear, the value is inferred to be 0 and a default operation is to be an operation performing no swap.

Other Examples of Semantics

Semantics of syntax elements of

asps_vdmc_ext_displacement_coordinate_system_map_flag and
asps_vdmc_ext_displacement_coordinate_system_map_idc may be defined as follows:

asps_vdmc_ext_displacement_coordinate_system_map_flag: a flag indicating whether to update a mapping method of the coordinate axis for the mesh displacement. In a case that the flag is equal to true, the mapping method of the coordinate axis for the mesh displacement is updated based on the value of asps_vdmc_ext_displacement_coordinate_system_map_idc described below. In a case that the flag is equal to false, the mapping method of the coordinate axis for the mesh displacement is not updated.

asps_vdmc_ext_displacement_coordinate_system_map_idc: displacement mapping information indicating the mapping method of the coordinate axis for the mesh displacement. Semantics of the values are as follows:

0: the first component, the second component, and the third component of the coordinate axes are mapped to a first image component (e.g., Y component), a second image component (e.g., Cb component), and a third image component (e.g., Cr component), respectively.
1: the second component, the first component, and the third component of the coordinate axes are mapped to the first image component, the second image component, and the third image component, respectively.
2: the third component, the second component, and the first component of the coordinate axes are mapped to the first image component, the second image component, and the third image component, respectively. Moreover, the following values may be used.
3: the first component, the third component, and the second component of the coordinate axes are mapped to the first image component, the second image component, and the third image component, respectively.
4: the second component, the third component, and the first component of the coordinate axes are mapped to the first image component, the second image component, and the third image component, respectively.
5: the third component, the first component, and the second component of the coordinate axes are mapped to the first image component, the second image component, and the third image component, respectively.

In the case that a syntax element does not appear, assume that a default operation is to be an operation with the value corresponding to 0.

Other Examples of Syntax

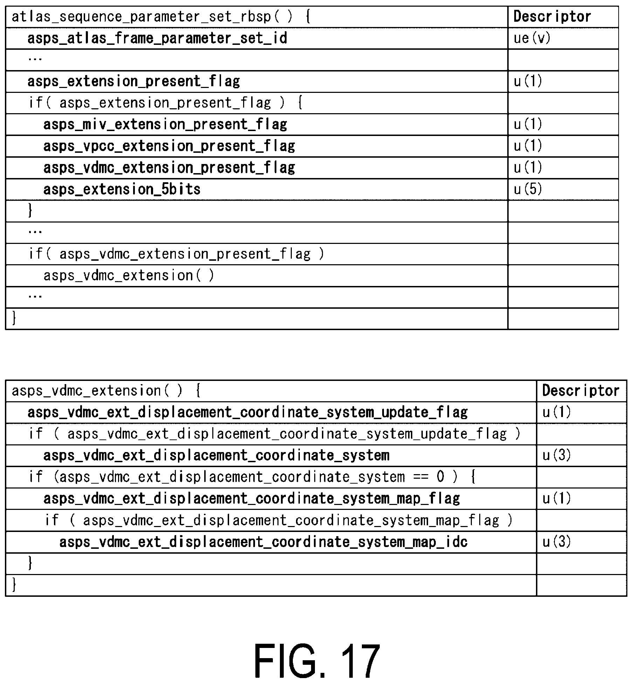

Alternatively, asps_vdmc_ext_displacement_coordinate_system_map_flag and asps_vdmc_ext_displacement_coordinate_system_map_idc may be configured to be signaled only in the case that mesh displacement coordinate system is a Cartesian coordinate system (asps_vdmc_ext_displacement_coordinate_system == 0) (FIG. 17). In other words, the image decoder 3051 included in the mesh displacement decoder 305 may decode the displacement mapping information of the mesh in a case that the coordinate system conversion information of the mesh indicates that the coordinate system is not a local coordinate system that can change in the frame, in unit of a region.

Coding efficiency can be further improved by configuring such that the swap of the coordinate axis or the map of the coordinate axis is updated only in the case of the Cartesian coordinate system.

The syntaxes of the coordinate system conversion information and the displacement mapping information may be not distinguished to decode one syntax element from the coded data. Specifically, asps_vdmc_ext_displacement_coordinate_system and asps_vdmc_ext_displacement_coordinate_system_map_idc may be combined into one syntax element asps_vdmc_ext_displacement_coordinate_system_and_map_idc.

For example, asps_vdmc_ext_displacement_coordinate_system_and_map_idc having a prescribed value may indicate a local coordinate system, and otherwise, indicate a Cartesian coordinate system, and further, the displacement mapping information may be defined in the syntax.

```
if (asps_vdmc_ext_displacement_coordinate_system_and_map_idc==0) {
  asps vdmc ext displacement coordinate_system = 1
} else {
  asps_vdmc_ext_displacement_coordinate_system = 0
  asps_vdmc_ext_displacement_coordinate_system_idc=
  asps_vdmc_ext_displacement_coordinate_system_and_map_idc -1
}
```

Of course, the coordinate system conversion parameters and the displacement mapping parameters may be derived directly.

```
if (asps_vdmc_ext_displacement_coordinate_system_and_map_idc==0) {
  displacementCoordinateSystem = 1
} else {
  displacementCoordinateSystem = 0
  displacementCoordinateSystemMapIdc =
  asps_vdmc_ext_displacement_coordinate_system_and_map_idc -1
}
```

Note that also in a case that

asps_vdmc_ext_displacement_coordinate_system_and_map_idc is represented by afps_vdmc_ext_displacement_coordinate_system_and_map_idc or pid_displacement_coordinate_system_and_map_idc, the similar processing may be performed with the respective component elements being replaced.

Furthermore, another example of the configuration may be that

```
asps_vdmc_ext_displacement_coordinate_system_and_map_idc is an N-bit integer, and the
 first higher bit (the N-th lower bit) indicates
 asps_vdmc_ext_displacement_coordinate_system and the N -1 lower bit indicates
 asps_vdmc_ext_displacement_coordinate_system_map_idc. N represents a positive integer.
```

For example, N = 4.

```
asps_vdmc_ext_displacement_coordinate_system =
 asps_vdmc_ext_displacement_coordinate_system_and_map_idc >> (N-1)
 asps_vdmc_ext_displacement_coordinate_system_map_idc =
 asps vdmc ext displacement coordinate_system and map idc & mask
```

where mask = (1 << (N - 1)) - 1.

The coding apparatus may perform the derivation as follows.

```
asps_vdmc_ext_displacement_coordinate_system_and_map_idc =
 (asps_vdmc_ext_displacement_coordinate_system << (N-1)) |
 (asps_vdmc_ext_displacement_coordinate_system_map_idc
```

Decoding and Deriving of Control Parameter in Picture/Frame Level

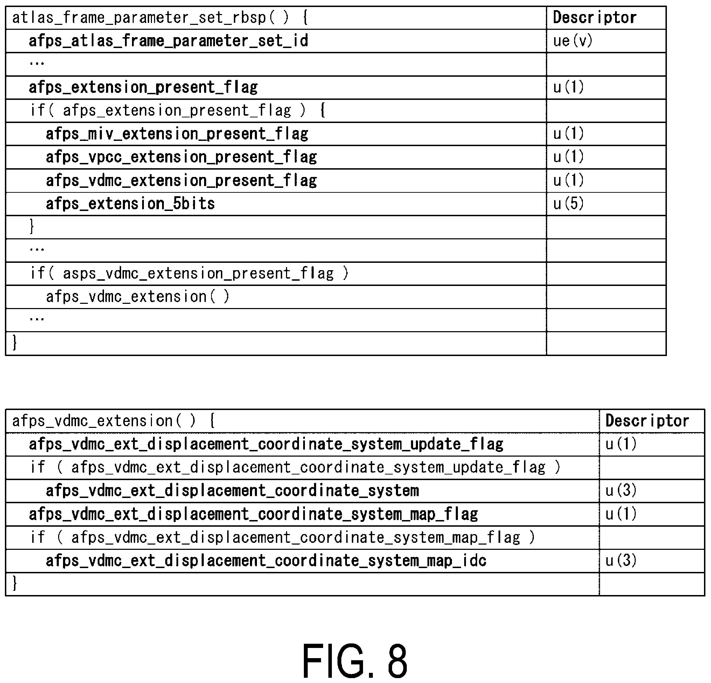

FIG. 8 is an example of a syntax of a configuration for transmitting the coordinate system conversion parameters and the displacement mapping parameters in a picture/frame level (Atlas Frame Parameter Set (AFPS)). In the AFPS, the coordinate system conversion parameters and the displacement mapping parameters are transmitted in a syntax of afps_vdmc_extension(). Semantics of respective fields are as follows: afps_vdmc_ext_displacement_coordinate_system_update_flag: a flag indicating whether to update a mesh displacement coordinate system. In a case that the flag is equal to true, the mesh displacement coordinate system is updated based on a value of afps_vdmc_ext_displacement_coordinate_system described below. In a case that the flag is equal to false, the mesh displacement coordinate system is not updated. afps_vdmc_ext_displacement_coordinate_system: coordinate system conversion information indicating the mesh displacement coordinate system. In a case that the value is equal to the first value (e.g., 0), the value indicates a Cartesian coordinate system. In a case that the value is equal to the second value (e.g., 1), the value indicates a local coordinate system. In the case that a syntax element does not appear, the value is inferred to be that obtained by decoding the value in the ASPS and a default coordinate system is to be a coordinate system indicated by the ASPS.

afps_vdmc_ext_displacement_coordinate_system_map_flag: a flag indicating whether to update a swap operation on a coordinate axis for the mesh displacement. In a case that the flag is equal to true, the swap operation on the coordinate axis for the mesh displacement is updated based on a value of afps_vdmc_ext_displacement_coordinate_system_map_idc described below. In a case that the flag is equal to false, the swap operation on the coordinate axis for the mesh displacement is not updated. afps_vdmc_ext_displacement_coordinate_system_map_idc: displacement mapping information indicating the swap operation on the coordinate axis for the mesh displacement. Semantics of the values are as those of the values indicating the swap operation described for asps_vdmc_ext_displacement_coordinate_system_map_idc. In the case that a syntax element does not appear, the value is inferred to be that obtained by decoding the value in the ASPS and a default operation is to be an operation indicated by the ASPS.

Other Examples of Semantics

Semantics of syntax elements of

afps_vdmc_ext_displacement_coordinate_system_map_flag,
afps_vdmc_ext_displacement_coordinate_system_map_idc may be defined as follows:

afps_vdmc_ext_displacement_coordinate_system_map_flag: a flag indicating whether to update a mapping method of the coordinate axis for the mesh displacement. In a case that the flag is equal to 1, the mapping method of the coordinate axis for the mesh displacement is updated based on the value of afps_vdmc_ext_displacement_coordinate_system_map_idc described below. In a case that the flag is equal to 0, the mapping method of the coordinate axis for the mesh displacement is not updated. afps_vdmc_ext_displacement_coordinate_system_map_idc: displacement mapping information indicating the mapping method of the coordinate axis for the mesh displacement. Semantics of the values are as other semantics described for asps_vdmc_ext_displacement_coordinate_system_map_idc.

In the case that a syntax element does not appear, the value is inferred to be that obtained by decoding the value in the ASPS and a default operation is to be an operation indicated by the ASPS.

Other Examples of Syntax

Alternatively, afps_vdmc_ext_displacement_coordinate_system_map_flag and afps_vdmc_ext_displacement_coordinate_system_map_idc may be configured to be signaled only in the case that mesh displacement coordinate system is a Cartesian coordinate system (afps vdmc ext displacement coordinate_system == 0).

afps_vdmc_ext_displacement_coordinate_system and
afps_vdmc_ext_displacement_coordinate_system_map_idc may be combined into one syntax element afps vdmc ext
displacement coordinate_system and map idc. For example, the configuration may be such that

```
afps vdmc ext displacement coordinate_system and map idc is an N-bit integer, and the
first higher bit (the N-th lower bit) indicates
afps_vdmc_ext_displacement_coordinate_system and the N -1 lower bit indicates
afps_vdmc_ext_displacement_coordinate_system_map_idc. N represents a positive integer.
```

For example, N = 4.

```
afps_vdmc_ext_displacement_coordinate_system =
 afps_vdmc_ext_displacement_coordinate_system_and_map_idc >> (N-1)
 afps_vdmc_ext_displacement_coordinate_system_map_idc =
 afps_vdmc_ext_displacement_coordinate_system_and_map_idc & mask
```

where mask = (1 << (N - 1)) - 1.
The coding apparatus may perform the derivation as follows.

```
afps_vdmc_ext_displacement_coordinate_system_and_map_idc =
(afps_vdmc_ext_displacement_coordinate_system << (N-1)) |
(afps_vdmc_ext_displacement_coordinate_system_map_idc
```

Decoding and Deriving of Control Parameter in Tile/Patch Level

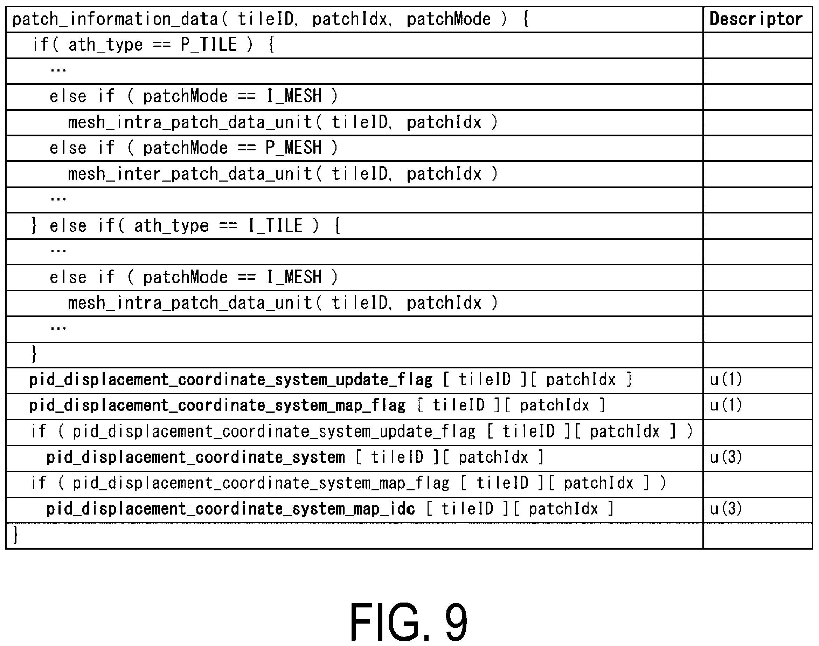

FIG. 9 is an example of a syntax of a configuration for transmitting the coordinate system conversion parameters
and the displacement mapping parameters in a tile/patch level. In the tile/patch level, patch_information_data() is transmitted. ath_type is information indicating a coding type of the tile. The coding type of the tile includes at least an intra-
prediction coded tile (I_TILE) and an inter-prediction coded tile (P_TILE). patchMode is information indicating a coding
type of the patch. The coding type of the patch includes at least an intra-prediction coded mesh (I_MESH) and an inter-
prediction coded mesh (P_MESH). In a case that ath_type indicates P_TILE, and the patchMode indicates I_MESH,
mesh_intra_patch_data_unit() is transmitted. In a case that ath_type indicates P_TILE, and the patchMode indicates
P_MESH, mesh_inter_patch_data_unit() is transmitted. In a case that ath_type indicates I_TILE, and the patchMode
indicates I_MESH, mesh_intra_patch_data_unit() is transmitted. Semantics of respective fields are as follows:

pid_displacement_coordinate_system_update_flag: a flag indicating whether to update a mesh displacement coordinate system. In a case that the flag is equal to true, the mesh displacement coordinate system is updated based
on a value of
pid_displacement_coordinate_system described below. In a case that the flag is equal to false, the mesh displacement coordinate system is not updated.
pid_displacement_coordinate_system: coordinate system conversion information indicating the mesh displacement
coordinate system. In a case that the value is equal to the first value (e.g., 0), the value indicates a Cartesian
coordinate system. In a case that the value is equal to the second value (e.g., 1) different from the above, the value
indicates a local coordinate system. In the case that a syntax element does not appear, assume that a default
coordinate system is to be a coordinate system indicated by the AFPS with the value being that obtained by decoding
the value in the AFPS.
pid_displacement_coordinate_system_map_flag: a flag indicating whether to update a swap operation on a coordinate axis for the mesh displacement. In a case that the flag is equal to true, the swap operation on the coordinate
axis for the mesh displacement is updated based on a value ofpid_displacement_coordinate_system_map_idc
described below. In a case that the flag is equal to false, the swap operation on the coordinate axis for the mesh
displacement is not updated.
pid_displacement_coordinate_system_map_idc: displacement mapping information indicating the swap operation
on the coordinate axis for the mesh displacement. Semantics of the values are as those of the values indicating the
swap operation described for asps_vdmc_ext_displacement_coordinate_system_map_idc. In the case that a syntax
element does not appear, the value is inferred to be that obtained by decoding the value in the AFPS and a default
operation is to be an operation indicated by the AFPS.

Another Example of Semantics

Semantics of syntax elements of pid displacement coordinate_system map flag and pid_displacement_coordinate_system_map_idc may be defined as follows: pid_displacement_coordinate_system_map_flag: a flag indicating whether to update a mapping method of the coordinate axis for the mesh displacement. In a case that the flag is equal to true, the mapping method of the coordinate axis for the mesh displacement is updated based on the value of pid_displacement_coordinate_system_map_idc described below. In a case that the flag is equal to false, the mapping method of the coordinate axis for the mesh displacement is not updated. pid_displacement_coordinate_system_map_idc: a mapping method of the coordinate axis for the mesh displacement. Semantics of the values are as other semantics described for asps_vdmc_ext_displacement_coordinate_system_map_idc. In the case that a syntax element does not appear, the value is inferred to be that obtained by decoding the value in the AFPS and a default operation is to be an operation indicated by the AFPS.

Other Examples of Syntax

Alternatively, pid displacement coordinate_system map flag, pid_displacement_coordinate_system_map_idc may be configured to be signaled only in the case that mesh displacement coordinate system is a Cartesian coordinate system (pid_displacement_coordinate_system == 0).

pid_displacement_coordinate_system and pid_displacement_coordinate_system_map_idc may be combined into one syntax element pid_displacement_coordinate_system_and_map_idc. For example, the configuration may be such that pid_displacement_coordinate_system_and_map_idc is an N-bit integer, and the first higher bit (the N-th lower bit) indicates pid_displacement_coordinate_system and the N -1 lower bit indicates pid_displacement_coordinate_system_map_idc. N represents a positive integer. For example, N = 4.

```
pid_displacement_coordinate_system =
pid_displacement_coordinate_system_and_map_idc >> (N-1)
pid_displacement_coordinate_system_map_idc =
pid_displacement_coordinate_system_and_map_idc & mask
where mask = (1 << (N - 1)) - 1.
```

The coding apparatus may perform the derivation as follows.

```
pid_displacement_coordinate_system_and_map_idc =
 (pid_displacement_coordinate_system << (N-1)) |
 (pid_displacement_coordinate_system_map_idc
 Deriving of Coordinate System Conversion Parameters
```

The mesh displacement decoder 305 derives the coordinate system conversion parameter displacementCoordinateSystem as follows:

```
if (pid_displacement_coordinate_system_update_flag) {
 displacementCoordinateSystem = pid_displacement_coordinate_system
 } else if (afps_vdmc_ext_displacement_coordinate_system_update_flag) {
  displacementCoordinateSystem = afps_vdmc_ext_displacement_coordinate_system
  } else if (asps_vdmc_ext_displacement_coordinate_system_update_flag) {
  displacementCoordinateSystem = asps_vdmc_ext_displacement_coordinate_system
  } else {
  displacementCoordinateSystem = 0}
```

Alternatively, in a case that syntax elements appear at multiple levels, the coordinate system conversion parameter displacementCoordinateSystem may be derived by overwriting by the value of the lower level.

```
displacementCoordinateSystem = 0
if (asps_vdmc_ext_displacement_coordinate_system_update_flag) {
  displacementCoordinateSystem = asps_vdmc_ext_displacement_coordinate_system
  }
  if (afps_vdmc_ext_displacement_coordinate_system_update_flag) {
```

```
displacementCoordinateSystem = afps_vdmc_ext_displacement_coordinate_system}
if (pid_displacement_coordinate_system_update_flag) {
displacementCoordinateSystem = pid_displacement_coordinate_system}
```

Deriving of Displacement Mapping Parameters

The mesh displacement decoder 305 derives the displacement mapping parameter displacementCoordinate-SystemMapIdc as follows:

```
if (pid_displacement_coordinate_system_map_flag) {
displacementCoordinateSystemMapIdc = pid_displacement_coordinate_system_map_idc
} else if (afps_vdmc_ext_displacement_coordinate_system_map_flag) {
displacementCoordinateSystemMapIdc =
afps vdmc ext displacement coordinate_system map idc
} else if (asps_vdmc_ext_displacement_coordinate_system_map_flag) {
displacementCoordinateSystemMapIdc =
asps vdmc ext displacement coordinate_system map idc
} else {
displacementCoordinateSystemMapIdc = 0}
```

Alternatively, in a case that syntax elements appear at multiple levels, the displacement mapping parameter displacementCoordinateSystemMapIdc may be derived by overwriting by the value of the lower level.

```
displacementCoordinateSystemMapIdc = 0
if (asps_vdmc_ext_displacement_coordinate_system_map_flag) {
displacementCoordinateSystemMapIdc =
asps_vdmc_ext_displacement_coordinate_system_map_idc
}
if (afps_vdmc_ext_displacement_coordinate_system_map_flag) {
displacementCoordinateSystemMapIdc =
afps_vdmc_ext_displacement_coordinate_system_map_idc
}
if (pid_displacement_coordinate_system_map_flag) {
displacementCoordinateSystemMapIdc = pid_displacement_coordinate_system_map_idc}
```

A header decoder included in the mesh displacement decoder 305 may derive the displacement mapping parameter each time each piece of the displacement mapping information is decoded, regardless of the gating flag. The gating flag may be, for example,

```
asps_vdmc_ext_displacement_coordinate_system_map_flag,
 asps_vdmc_ext_displacement_coordinate_system_map_idc, or
 pid_displacement_coordinate_system_map_idc. The displacement mapping information
 may be, for example, asps_vdmc_ext_displacement_coordinate_system_map_idc,
 afps_vdmc_ext_displacement_coordinate_system_map_idc, or
 pid_displacement_coordinate_system_map_idc.
displacementCoordinateSystemMapIdc =
asps_vdmc_ext_displacement_coordinate_system_map_idc
displacementCoordinateSystemMapIdc =
afps_vdmc_ext_displacement_coordinate_system_map_idc
displacementCoordinateSystemMapIdc = pid_displacement_coordinate_system_map_idc
```

Operation of Mesh Displacement Decoder

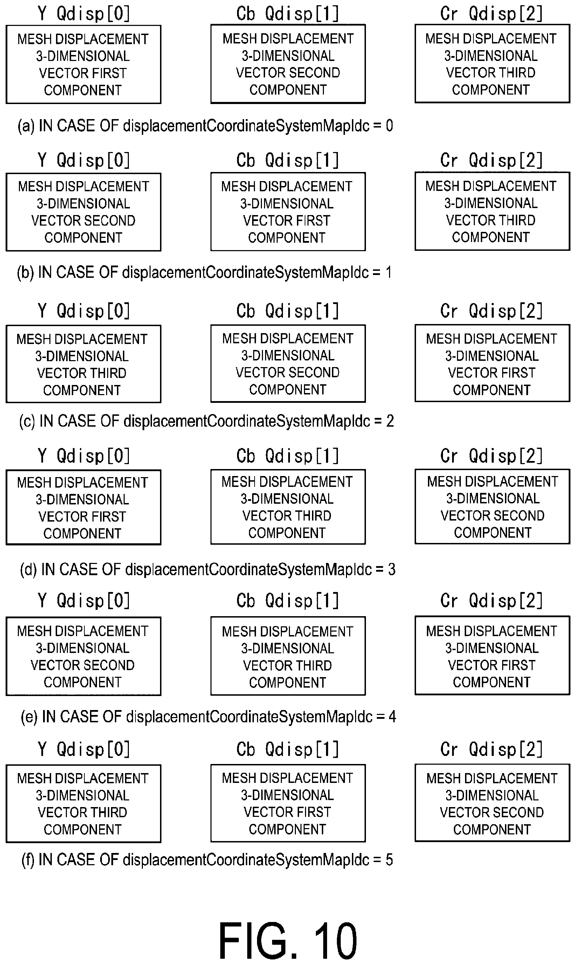

The image decoder 3051 decodes the mesh displacement image coding stream coded in VVC, HEVC, or the like, and outputs a decoded image having pixel values of quantized mesh displacement (mesh displacement image, mesh displacement array). The image may be in a 4:4:4 YCbCr format. The mesh displacement image may be a converted mesh displacement image. The mesh displacement image may be a residual of the mesh displacement image. Each component of a three-dimensional image is referred to as an image component (or a color component, or a component).
The displacement unmapping unit 3052 generates a mesh displacement from the mesh displacement image. Specifically, a quantized mesh displacement array Qdisp is derived from the mesh displacement image based on the value of the displacement mapping parameter displacementCoordinateSystemMapIdc (FIG. 10). In FIG. 10, the mesh displacements of Y, Cb, and Cr correspond to Qdisp[0][], Qdisp[1][], and Qdisp[2][], respectively.

```
if (displacementCoordinateSystemMapIdc == 0) {

        derive the first component Qdisp[0][] of the quantized mesh displacement array from a luma (Y) image.
        derive the second component Qdisp [1][] of the quantized mesh displacement array from a chroma (Cb) image.
        derive the third component Qdisp[2] [] of the quantized mesh displacement array from a chroma(Cr) image.

} else if (displacementCoordinateSystemMapIdc == 1) {

        derive the second component Qdisp[1][] of the quantized mesh displacement array from the luma (Y) image.
        derive the first component Qdisp[0] [] of the quantized mesh displacement array from the chroma (Cb) image.
        derive the third component Qdisp[2] [] of the quantized mesh displacement array from the chroma(Cr) image.

} else if (displacementCoordinateSystemMapIdc == 2) {

        derive the third component Qdisp[2] [] of the quantized mesh displacement array from the luma (Y) image.
        derive the second component Qdisp[1][] of the quantized mesh displacement array from the chroma (Cb) image.
        derive the first component Qdisp[0] [] of the quantized mesh displacement array from the chroma (Cr) image.

}
```

Here, the displacement unmapping unit 3052 switches the image component allocated to the first component based on the displacement mapping parameter.

The second component (Cb) and the third component (Cr) may be configured to be replaceable, and the quantized mesh displacement Qdisp may be derived from the decoded image as described below:

```
if (displacementCoordinateSystemMapIdc == 0) {

        derive the first component Qdisp[0] [] of the quantized mesh displacement array from the luma (Y) image.
        derive the second component Qdisp[1][] of the quantized mesh displacement array from the chroma (Cb) image.
        derive the third component Qdisp[2] [] of the quantized mesh displacement array from the chroma(Cr) image.

} else if (displacementCoordinateSystemMapIdc == 1) {

        derive the second component Qdisp[1][] of the quantized mesh displacement array from the luma (Y) image.
        derive the first component Qdisp[0] [] of the quantized mesh displacement array from the chroma (Cb) image.
        derive the third component Qdisp[2] [] of the quantized mesh displacement array from the chroma(Cr) image.

} else if (displacementCoordinateSystemMapIdc == 2) {

        derive the third component Qdisp[2] [] of the quantized mesh displacement array from the luma (Y) image.
        derive the second component Qdisp[1][] of the quantized mesh displacement array from the chroma (Cb) image.
        derive the first component Qdisp[0][] of the quantized mesh displacement array from the chroma (Cr) image.

} else if (displacementCoordinateSystemMapIdc == 3) {

        derive the first component Qdisp[0] [] of the quantized mesh displacement array from the luma (Y) image.
        derive the third component Qdisp[2][] of the quantized mesh displacement array from the chroma(Cb) image.
        derive the second component Qdisp[1][] of the quantized mesh displacement array from the chroma (Cr) image.

} else if (displacementCoordinateSystemMapIdc == 4) {

        derive the second component Qdisp[1][] of the quantized mesh displacement array from the luma (Y) image.
        derive the third component Qdisp[2] [] of the quantized mesh displacement array from the chroma(Cb) image.
        derive the first component Qdisp[0] [] of the quantized mesh displacement array from the chroma (Cr) image.

} else if (displacementCoordinateSystemMapIdc == 5) {
```

derive the third component Qdisp[2] [] of the quantized mesh displacement array from the luma (Y) image.
derive the first component Qdisp[0] [] of the quantized mesh displacement array from the chroma (Cb) image.
derive the second component Qdisp[1][] of the quantized mesh displacement array from the chroma (Cr) image.

```
}
```

Assuming that the image decoded by the image decoder 3051 is referred to as dispFrame, the following can be expressed.

```
if (displacementCoordinateSystemMapIdc == 0) {
 Qdisp[0][] = dispFrames[0]
 Qdisp[1][] = dispFrames[1]
 Qdisp[2][] = dispFrames[2]
 } else if (displacementCoordinateSystemMapIdc == 1) {
 Qdisp[1][] = dispFrames[0]
 Qdisp[0][] = dispFrames[1]
 Qdisp[2][] = dispFrames[2]
} else if (displacementCoordinateSystemMapIdc == 2) {
 Qdisp[2][] = dispFrames[0]
 Qdisp[1][] = dispFrames[1]
 Qdisp[0][] = dispFrames[2]
} else if (displacementCoordinateSystemMapIdc == 3) {
 Qdisp[0][] = dispFrames[0]
 Qdisp[2][] = dispFrames[1]
 Qdisp[1][] = dispFrames[2]
 } else if (displacementCoordinateSystemMapIdc == 4) {
 Qdisp[1][] = dispFrames[0]
 Qdisp[2][] = dispFrames[1]
 Qdisp[0][] = dispFrames[2]
 } else if (displacementCoordinateSystemMapIdc == 5) {
 Qdisp[2][] = dispFrames[0]
 Qdisp[0][] = dispFrames[1]
 Qdisp[1][] = dispFrames[2]}
```

Only in a case that the mesh displacement is not in the local coordinate system, the mapping based on the displacement mapping parameters may be performed. In other words, in a case that the coordinate system conversion information of the mesh indicates local coordinates, the respective components of the mesh displacement may be fixedly derived from the image components of the decoded image, regardless of displacementCoordinateSystemMapIdc. The case that the coordinate system conversion information of the mesh indicates local coordinates is a case that the conditions such as

asps_vdmc_ext_displacement_coordinate_system != 0,
afps_vdmc_ext_displacement_coordinate_system != 0, or
pid_displacement_coordinate_system != 0 are met, for example.

```
if (the coordinate system conversion information of the mesh indicates local
coordinates‖displacementCoordinateSystemMapIdc == 0) {(condition 1)
 Qdisp[0][] = dispFrames[0]
 Qdisp[1][] = dispFrames[1]
 Qdisp[2][] = dispFrames[2]
} else if (displacementCoordinateSystemMapIdc == 1) {
 Qdisp[1][] = dispFrames[0]
 Qdisp[0][] = dispFrames[1]
 Qdisp[2][] = dispFrames[2]
} else if (displacementCoordinateSystemMapIdc == 2) {
 Qdisp[2][] = dispFrames[0]
 Qdisp[1][] = dispFrames[1]
 Qdisp[0][] = dispFrames[2]
} else if (displacementCoordinateSystemMapIdc == 3) {
 Qdisp[0][] = dispFrames[0]
 Qdisp[2][] = dispFrames[1]
```

```
Qdisp[1][] = dispFrames[2]
} else if (displacementCoordinateSystemMapIdc == 4) {
Qdisp[1][] = dispFrames[0]
Qdisp[2][] = dispFrames[1]
Qdisp[0][] = dispFrames[2]
} else if (displacementCoordinateSystemMapIdc == 5) {
Qdisp[2][] = dispFrames[0]
Qdisp[0][] = dispFrames[1]
Qdisp[1][] = dispFrames[2]}
```

Note that the above (condition 1) and the processing content in a case that (condition 1) is met may be expressed below.

```
if (the coordinate system conversion information of the mesh indicates local coordinates) {
Qdisp[0][] = dispFrames[0]
Qdisp[1][] = dispFrames[1]
Qdisp[2][] = dispFrames[2]
} else if displacementCoordinateSystemMapIdc == 0) {
Qdisp[0][] = dispFrames[0]
Qdisp[1][] = dispFrames[1]
Qdisp[2][] = dispFrames[2]
} else... The same processing can be performed using the above.
```

Note that, without setting the variable displacementCoordinateSystemMapIdc from the decoded syntax (displacement mapping information), the quantized mesh displacement Qdisp may be derived from the decoded image by using the syntax value of the displacement mapping information instead of displacementCoordinateSystemMapIdc.

The inverse quantization unit 3053 performs inverse quantization based on a quantizer scale value iscale to derive a mesh displacement Tdisp after the transform (e.g., wavelet transform). Tdisp may be a Cartesian coordinate system or a local coordinate system. iscale is a value derived from the quantization parameter of each component of the mesh displacement image.

```
Tdisp[0][] = (Qdisp[0][] * iscale[0] + iscaleOffset) >> iscaleShift
Tdisp[1][] = (Qdisp[1][] * iscale[1] + iscaleOffset) >> iscaleShift
Tdisp[2][] = (Qdisp[2][] * iscale[2] + iscaleOffset) >> iscaleShift
```

Here iscaleOffset = 1 << (iscaleShift - 1). iscaleShift may be a predefined constant, or a value obtained by decoding coded data that is coded in the sequence level, picture/frame level, tile/patch level, or the like.

The inverse transform processing unit 3054 performs inverse transform g (e.g., inverse wavelet transform) to derive a mesh displacement d.

```
d[0][] = g(Tdisp[0][])
d[1][] = g(Tdisp[1][])
d[2][] = g(Tdisp[2][])
```

The coordinate system conversion unit 3055 converts the mesh displacement (mesh displacement coordinate system) into a Cartesian coordinate system based on the value of the coordinate system conversion parameter displacementCoordinateSystem. Specifically, in the case of displacementCoordinateSystem = 1, displacement of the local coordinate system is converted to displacement of the Cartesian coordinate system. Where d represents a three-dimensional vector indicating a mesh displacement before coordinate system conversion. The disp represents a three-dimensional vector indicating a mesh displacement after coordinate system conversion, and is a Cartesian coordinate system. n_vec, t_vec, and b_vec represent three-dimensional vectors (of a Cartesian coordinate system) corresponding to respective axes of the local coordinate system of the target region or target vertex.

```
if (displacementCoordinateSystem == 0) {
  disp = d
  } else if (displacementCoordinateSystem == 1){
  disp = d[0] * n_vec + d[1] * t_vec + d[2] * b_vec}
```

The derivation method indicated by the vector multiplication described above is individually represented by a scalar as follows:

```
if (displacementCoordinateSystem == 0) {
  for (i = 0; i < 3; i++) {disp[i] = d[i]}
  } else if (displacementCoordinateSystem == 1){
  for (i = 0; i < 3; i++) {disp[i] = d[0] * n_vec[i] + d[1] * t_vec[i] + d[2] * b_vec[i]} }
```

Note that the configuration may be such that the same variable name is assigned as disp = d before and after the conversion and the value of d is updated by the coordinate conversion.

Alternatively, the following configuration may be used:

```
if (displacementCoordinateSystem == 0) {
  disp = d
  } else if (displacementCoordinateSystem == 1){
  disp = d[0] * n_vec + d[1] * t_vec + d[2] * b_vec
  } else if (displacementCoordinateSystem == 2){
  disp = d[0] * n_vec2 + d[1] * t_vec2 + d[2] * b_vec2 }
```

Here, n_vec2, t_vec2, and b_vec2 are three-dimensional vectors (of a Cartesian coordinate system) corresponding to respective axes of the local coordinate system of the adjacent region.

The following configuration may be used.

```
if (displacementCoordinateSystem == 0) {
  disp = d
  } else if (displacementCoordinateSystem == 1){
  disp = d[0] * n_vec3 + d[1] * t_vec3 + d[2] * b_vec3 }
```

Here, n_vec3, t_vec3, and b_vec3 are three-dimensional vectors (of a Cartesian coordinate system) corresponding to respective axes of the local coordinate system of the target region with a suppressed variation. For example, the vectors of the coordinate system used to decode from the previous coordinate system and the current coordinate system are derived as follows:

```
n_vec3 = (w * n_vec3 + (WT - w) * n_vec) >> wShift
t_vec3 = (w * t_vec3 + (WT - w) * t_vec) >> wShift
b_vec3 = (w * b_vec3 + (WT - w) * b_vec) >> wShift
```

Here, for example, wShift = 2, 3, 4, WT = 1 « wShift, w = 1, ..., WT - 1. For example, in a case that w = 3 and wShift = 3, n_vec3 = (3 * n_vec3 + 5 * n_vec) » 3,

```
t_vec3 = (3 * t_vec3 + 5 * t_vec) >> 3,
b_vec3 = (3 * b_vec3 + 5 * b_vec) >> 3.
```

The vectors may be configured to be selectable depending on the value of the parameter displacementCoordinateSystem decoded from the coded data, as in the configuration below:

```
if (displacementCoordinateSystem == 0) {
  disp = d
  } else if (displacementCoordinateSystem == 1){
  disp = d[0] * n_vec + d[1] * t_vec + d[2] * b_vec
  } else if (displacementCoordinateSystem == 6){
  disp = d[0] * n_vec3 + d[1] * t_vec3 + d[2] * b_vec3 }
```

In the image decoder 3051, typically, an intra-prediction method or an inter-prediction method high in predictive accuracy (e.g., an interpolation image generation with a large number of taps) is used for in the first component. Thus, the (quantized) mesh displacement images allocated to the luma image of the first component is higher in the image quality (efficiently coded) than the (quantized) mesh displacement images allocated to the chroma images of the second and third components. Therefore, the accuracy of the mesh displacement image allocated to the luma image is higher. On the other hand, as for a surface including a vertex, a displacement in the normal direction becomes a large visual change, so a displacement component in the normal direction is critical to the image quality. Therefore, by allocating the displacement component in the normal direction to the luma image, the accuracy of the displacement component in the normal direction can be increased even with the same coding amount.

However, in the local coordinate system, the coordinate system changes in units of region or vertex, and thus

16

the accuracy may decrease depending on the sequence. Also, in the Cartesian coordinate system, the amount of changes in the X axis, Y axis, and Z axis vary depending on the sequence, and thus the efficiency changes depending on the allocation method. In this method, the efficiency can be improved by appropriately switching the two coordinate systems (the local coordinate system and the Cartesian coordinate system), and further changing the method of allocating the vector to the luma image.

Reconstruction of Mesh

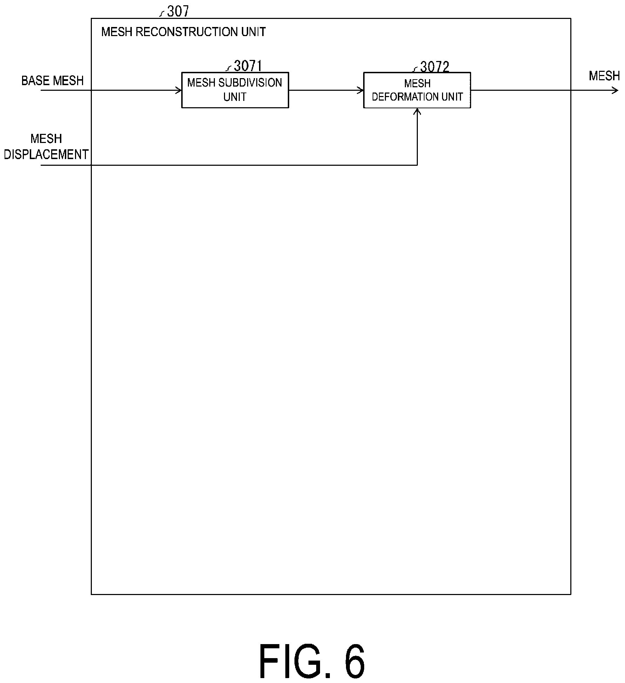

FIG. 6 is a functional block diagram illustrating a configuration of the mesh reconstruction unit 307. The mesh reconstruction unit 307 includes a mesh subdivision unit 3071 and a mesh deformation unit 3072.

The mesh subdivision unit 3071 subdivides the base mesh output from the base mesh decoder 303 to generate a subdivided mesh.

FIG. 1 1(a) illustrates a portion (triangle) of the base mesh, and the triangle is defined by vertices v1, v2, and v3. v1, v2, and v3 are three-dimensional vectors. The mesh subdivision unit 3071 adds new vertices v12, v13, and v23 to intermediates of respective sides of the triangle to generate and output a subdivided mesh (FIG. 1 1(b)).

$$v12 = (v1 + v2)/2$$

$$v13 = (v1 + v3)/2$$

$$v23 = (v2 + v3)/2$$

Alternatively, the following may be used.

$$v12 = (v1 + v2 + 1) >> 1$$

$$v13 = (v1 + v3 + 1) >> 1$$

$$v23 = (v2 + v3 + 1) >> 1$$

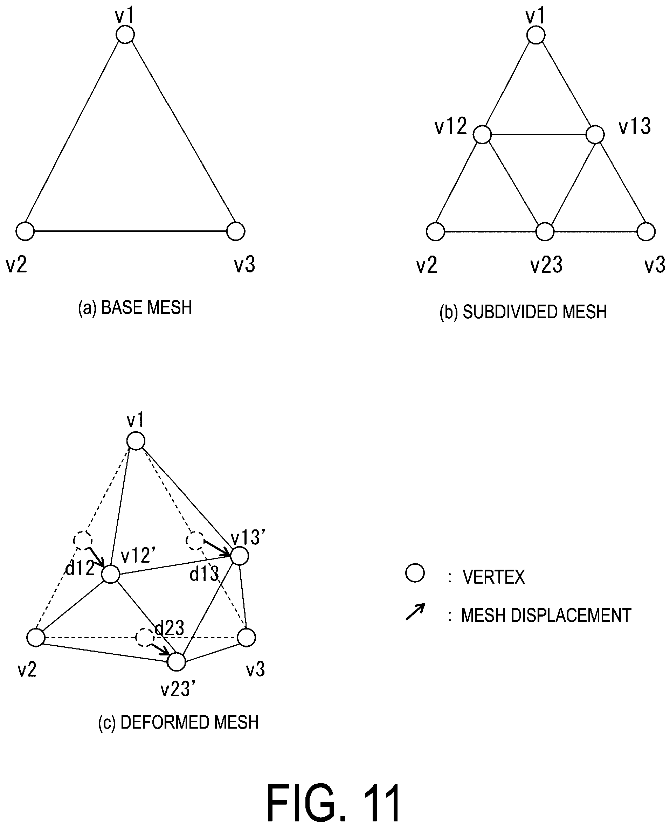

The mesh deformation unit 3072 receives the subdivided mesh and the mesh displacement input and adds mesh displacements d12, d13, and d23 to generate and output a deformed mesh (FIG. 11(c)). The mesh displacement is the output of the mesh displacement decoder 305 (coordinate system conversion unit 3055). d12, d13, and d23 are the mesh displacements corresponding to the vertices v12, v13, and v23 added by the mesh subdivision unit 3071, respectively.

$$v12' = v12 + d12$$

$$v13' = v13 + d13$$

$$v23' = v23 + d23$$

Note that d12 = disp[0][], d23 = disp[1][], d23 = disp[3][] may be applicable.

As described above, the coordinate system conversion parameters and/or the displacement mapping parameters are configured to be switchable in the sequence level, the picture/frame level, or the tile/patch level, allowing the selection of the optimal coordinate system and the selection of the mapping of the image and the displacement image (image packing) in accordance with the characteristics of the 3D data. Therefore, the 3D data can be coded or decoded with high quality.

Configuration of 3D Data Coding Apparatus according to First Embodiment

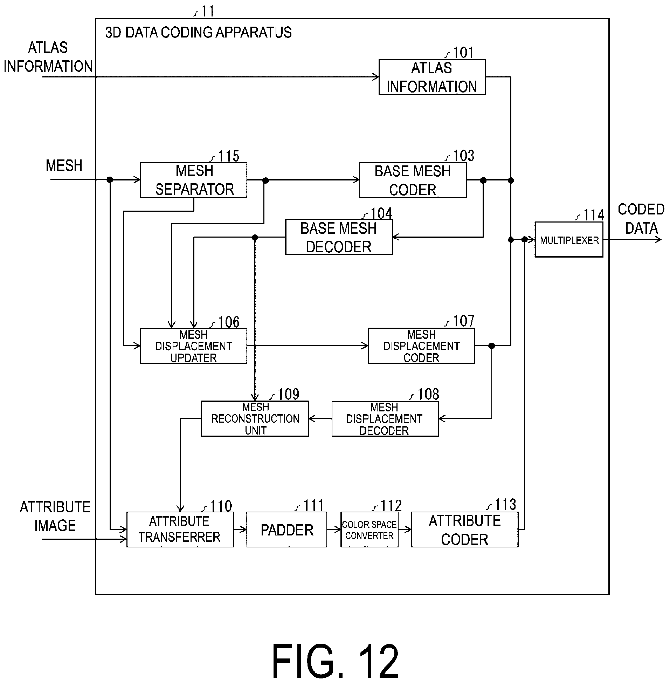

FIG. 12 is a functional block diagram illustrating a schematic configuration of the 3D data coding apparatus 11 according to the first embodiment. The 3D data coding apparatus 11 includes an atlas information coder 101, a base mesh coder 103, a base mesh decoder 104, a mesh displacement updater 106, a mesh displacement coder 107, a mesh displacement decoder 108, a mesh reconstruction unit 109, an attribute transferrer 110, a padder 111, a color space converter 112, and attribute coder 113, a multiplexer 114, and a mesh separator 115. The 3D data coding apparatus 11 receives the input atlas information, base mesh, mesh displacement, mesh, and attribute image as 3D data, and outputs coded data.

The atlas information coder 101 codes the atlas information.

The base mesh coder 103 codes the base mesh to output a base mesh coding stream. The coding scheme to be used includes Draco or the like.

The base mesh decoder 104 is similar to the base mesh decoder 303, and thus description thereof is omitted.

The mesh displacement updater 106 adjusts the mesh displacement based on the (original) base mesh and decoded base mesh to output an updated mesh displacement.

The mesh displacement coder 107 codes the updated mesh displacement to output a mesh displacement image coding stream. The coding scheme to be used includes VVC, HEVC, and the like.

The mesh displacement decoder 108 is similar to the mesh displacement decoder 305, and thus description thereof is omitted.

The mesh reconstruction unit 109 is similar to the mesh reconstruction unit 307, and thus description thereof is omitted.

The attribute transferrer 110 receives the input of the (original) mesh, the reconstructed mesh output from the mesh reconstruction unit 109 (the mesh deformation unit 3072), and the attribute image to output an attribute image optimized for the reconstructed mesh.

The padder 111 receives the optimized attribute image input to perform padding processing on a region with empty pixel value.

The color space converter 112 performs color space conversion from the RGB format to the YCbCr format.

The attribute coder 113 codes the attribute image in the YCbCr format output from the color space converter 112 to output an attribute image coding stream. The coding scheme to be used includes VVC, HEVC, and the like.

The multiplexer 114 multiplexes and outputs, as the coded data, the atlas information coding stream, the base mesh coding stream, the mesh displacement image coding stream, and the attribute image coding stream. A multiplexing scheme to be used includes a byte stream format, an ISOBMFF, and the like.

Operation of Mesh Separator

The mesh separator 115 generates a base mesh and a mesh displacement from the mesh.

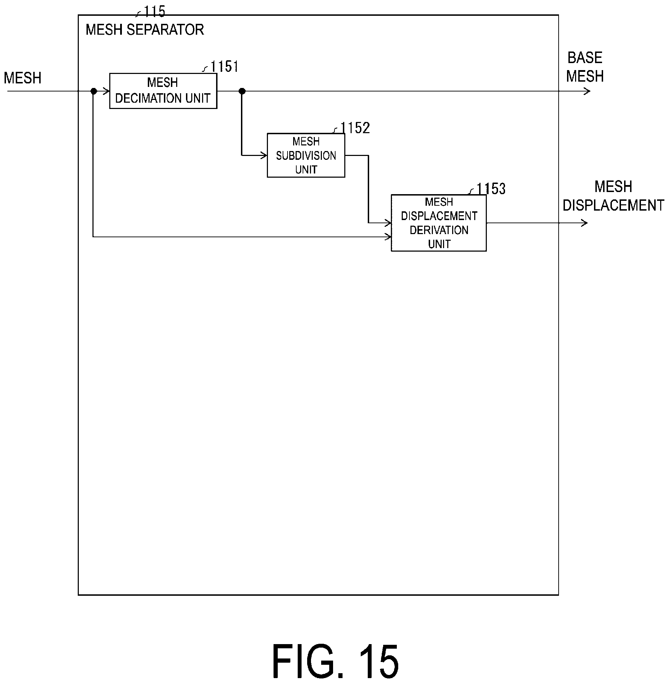

FIG. 15 is a functional block diagram illustrating a configuration of the mesh separator 115. The mesh separator 115 includes a mesh decimation unit 1151, a mesh subdivision unit 1152, a mesh displacement derivation unit 1153.

The mesh decimation unit 1151 decimates some vertices from the mesh to generate a base mesh.

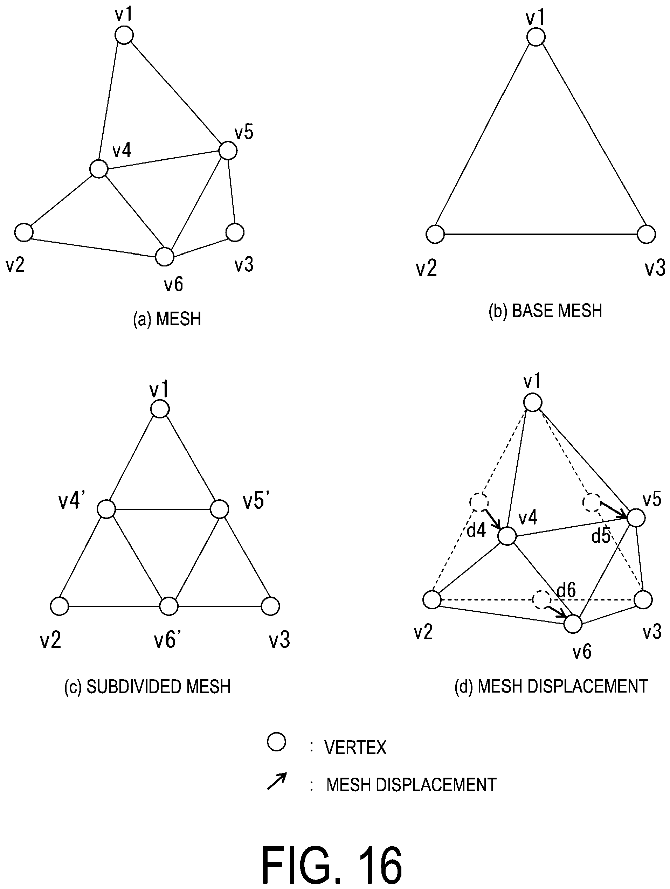

FIG. 16(a) illustrates a portion of the mesh, and the mesh includes vertices v1, v2, v3, v4, v5, and v6. Each of v1, v2, v3, v4, v5, and v6 represents a three-dimensional vector. The mesh decimation unit 1151 decimates the vertices v4, v5, v6 to generate and output a base mesh (FIG. 16(b)).

The mesh subdivision unit 1152 subdivides the base mesh to generate a subdivided mesh like the mesh subdivision unit 3071 (FIG. 16(c)).

$$v4' = (v1 + v2)/2$$

$$v5' = (v1 + v3)/2$$

$$v6' = (v2 + v3)/2$$

The mesh displacement derivation unit derives and outputs, based on the mesh and the subdivided mesh, displacements d4, d5, and d6, as mesh displacements, of the vertices v4, v5, and v6 for vertices v4', v 5', and v6' (FIG. 16(d)).

$$d4 = v4 - v4'$$

$$d5 = v5 - v5'$$

$$d6 = v6 - v6'$$

Coding of Base Mesh

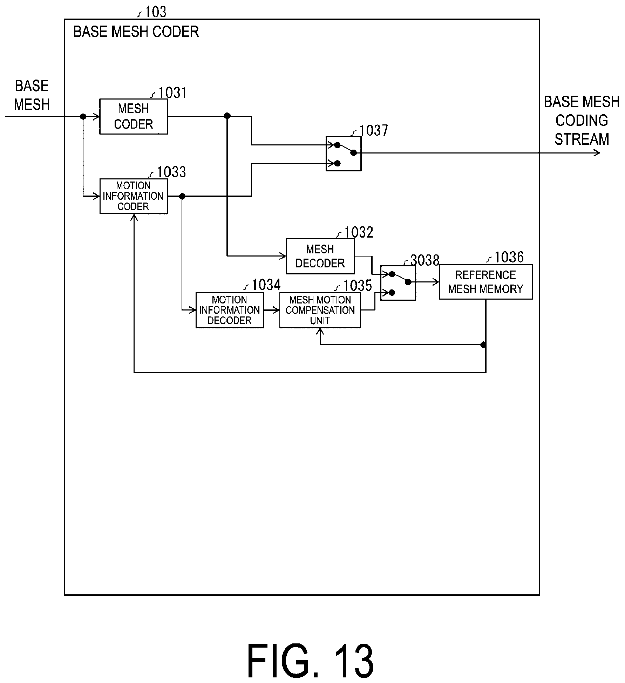

FIG. 13 is a functional block diagram illustrating a configuration of the base mesh coder 103. The base mesh coder 103 includes a mesh coder 1031, a mesh decoder 1032, a motion information coder 1033, a motion information decoder 1034, a mesh motion compensation unit 1035, a reference mesh memory 1036, a switch 1037, and a switch 1038. The base mesh coder 103 may be configured to include a base mesh quantization unit (not illustrated) after the output of the base mesh. The switch 1037 and the switch 1038 connect to a side where motion compensation is not performed, in a case that a base mesh is coded (intra-coded) without referring to another base mesh (e.g., an already coded base mesh). If not, in a case that the base mesh is coded (inter-coded) with referring to another base mesh, the switches 1037 and 1038 connect to a side where the motion compensation is performed.

The mesh coder 1031, which has an intra-coding function of the base mesh, intra-codes the base mesh to output a base mesh coding stream. The coding scheme to be used includes Draco or the like.

The mesh decoder 1032 is similar to the mesh decoder 3031, and thus description thereof is omitted.

The motion information coder 1033, which has an inter-coding function of the base mesh, inter-codes the base mesh to output a base mesh coding stream. The coding scheme to be used includes entropy coding such as arithmetic coding.

The motion information decoder 1034 is similar to the motion information decoder 3032, and thus description thereof is omitted.

The mesh motion compensation unit 1035 is similar to the mesh motion compensation unit 3033, and thus description thereof is omitted.

The reference mesh memory 1036 is similar to the reference mesh memory 3034, and thus description thereof is omitted.

Coding of Mesh Displacement

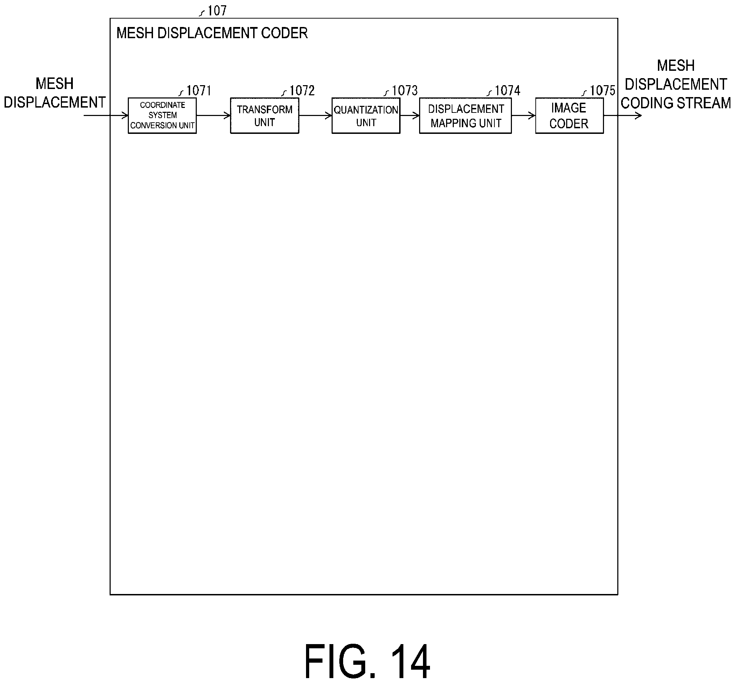

FIG. 14 is a functional block diagram illustrating a configuration of the mesh displacement coder 107. The mesh displacement coder 107 includes a coordinate system conversion unit 1071, a transform unit 1072, a quantization unit 1073, and a displacement mapping unit 1074 (an image pack unit, displacement coder). As illustrated in the figure, the mesh displacement coder 107 may further include an image coder 1075. Alternatively, the mesh displacement coder 107 may be configured to not include the image coder 1075 and the coding of the displacement image may be performed using an external 3D data coding apparatus.

The coordinate system conversion unit 1071 converts the mesh displacement coordinate system from the Cartesian coordinate system into a coordinate system for coding the displacement (for example, a local coordinate system) based on the value of the coordinate system conversion parameter displacementCoordinateSystem. Here, disp represents a three-dimensional vector indicating a mesh displacement before coordinate system conversion, d represents a three-dimensional vector indicating a mesh displacement after coordinate system conversion, and n_vec, t_vec, and b_vec are three-dimensional vectors (of a Cartesian coordinate system) indicating the respective axes of the local coordinate system.

```
if (displacementCoordinateSystem == 0) {
  d = disp
  } else if (displacementCoordinateSystem == 1){
  d = (disp * n_vec, disp * t_vec, disp * b_vec) }
```

The mesh displacement coder 107 may update the value of displacementCoordinateSystem in a sequence level. Alternatively, the update may be in the picture/frame level. Alternatively, the update may be in the tile/patch level. The initial value is 0 indicating the Cartesian coordinate system.

In a case that displacementCoordinateSystem is updated in the sequence level, the syntax having the configuration of FIG. 7 is used. Set asps_vdmc_ext_displacement_coordinate_system_update_flag to 1 in a case of updating the coordinate system, or to 0 in a case of not updating the coordinate system. Set asps_vdmc_ext_displacement_coordinate_system to 0 in the case of the Cartesian coordinate system, or to 1 in the case of the local coordinate system.

In a case that displacementCoordinateSystem is changed in the picture/frame level, the syntax having the configuration of FIG. 8 is used. Set afps vdmc ext displacement coordinate_system update flag to 1 in the case of updating the coordinate system, or to 0 in the case of not updating the coordinate system. Set afps_vdmc_ext_displacement_coordinate_system to 0 in the case of the Cartesian coordinate system, or to 1 in the case of the local coordinate system.

In a case that displacementCoordinateSystem is changed in the tile/patch level, the syntax having the configuration of FIG. 9 is used. Set pid_displacement_coordinate_system_update_flag to 1 in the case of updating the coordinate system, or to 0 in the case of not updating the coordinate system. Set pid_displacement_coordinate_system to 0 in the case of the Cartesian coordinate system, or to 1 in the case of the local coordinate system.

The transform unit 1072 performs transform f (e.g., wavelet transform) to derive a mesh displacement Tdisp after the transform.

$$Tdisp[0][] = f(d[0][])$$

$$Tdisp[1][] = f(d[1][])$$

$$Tdisp[2][] = f(d[2][])$$

The quantization unit 1073 performs quantization based on a quantization scale value scale derived from the quantization parameters of each component of the mesh displacement to derive a mesh displacement Qdisp after the quantization.

$$Qdisp[0][] = Tdisp[0][]/scale[0]$$

$$Qdisp[1][] = Tdisp[1][]/scale[1]$$

$$Qdisp[2][] = Tdisp[2][]/scale[2]$$

Alternatively, the scale value may be approximated by a power of 2 to derive Qdisp using the following relationships.

$$scale[i] = 1 << scale2[i]$$

$$Qdisp[0][] = Tdisp[0][] >> scale2[0]$$

$$Qdisp[1][] = Tdisp[1][] >> scale2[1]$$

$$Qdisp[2][] = Tdisp[2][] >> scale2[2]$$

The displacement mapping unit 1074 generates an image in the YCbCr format from the mesh displacement Qdisp after the quantization based on the value of the displacement mapping parameter displacementCoordinateSystemMapIdc (FIG. 10).

```
if (displacementCoordinateSystemMapIdc == 0) {
```

pack the first component Qdisp[0] [] of the quantized mesh displacement array in the luma (Y) image.
pack the second component Qdisp[1][] of the quantized mesh displacement array in the chroma (Cb) Image.
pack the third component Qdisp[2] [] of the quantized mesh displacement array in the chroma (Cr) Image.

```
} else if (displacementCoordinateSystemMapIdc == 1) {
```

pack the second component Qdisp[1][] of the quantized mesh displacement array in the luma (Y) image.
pack the first component Qdisp[0] [] of the quantized mesh displacement array in the chroma (Cb) Image.
pack the third component Qdisp[2] [] of the quantized mesh displacement array in the chroma (Cr) Image.

```
} else if (displacementCoordinateSystemMapIdc == 2) {
```

pack the third component Qdisp[2] [] of the quantized mesh displacement array in the luma (Y) image.
pack the second component Qdisp[1][] of the quantized mesh displacement array in the chroma (Cb) Image.
pack the first component Qdisp[0] [] of the quantized mesh displacement array in the chroma (Cr) Image.

```
} else if (displacementCoordinateSystemMapIdc == 3) {
```

pack the first component Qdisp[0] [] of the quantized mesh displacement array in the luma (Y) image.
pack the third component Qdisp[2] [] of the quantized mesh displacement array in the chroma (Cb) Image.
pack the second component Qdisp[1][] of the quantized mesh displacement array in the chroma (Cr) Image.

```
} else if (displacementCoordinateSystemMapIdc == 4) {
```

pack the second component Qdisp[1][] of the quantized mesh displacement array in the luma (Y) image.
pack the third component Qdisp[2] [] of the quantized mesh displacement array in the chroma (Cb) Image.
pack the first component Qdisp[0] [] of the quantized mesh displacement array in the chroma (Cr) Image.

```
} else if (displacementCoordinateSystemMapIdc == 5) {
```

pack the third component Qdisp[2] [] of the quantized mesh displacement array in the luma (Y) image.
pack the first component Qdisp[0] [] of the quantized mesh displacement array in the chroma (Cb) Image.
pack the second component Qdisp[1][] of the quantized mesh displacement array in the chroma (Cr) Image.

```
}
```

The mesh displacement coder 107 may update the value of displacementCoordinateSystemMapIdc in the sequence level. Alternatively, the update may be in the picture/frame level. Alternatively, the update may be in the tile/patch level. The initial value of the displacementCoordinateSystemMapIdc is 0.

Semantics of the value of displacementCoordinateSystemMapIdc is as follows.

0: the first component, the second component, and the third component of the coordinate axes are mapped to a first image component (e.g., Y component), a second image component (e.g., Cb component), and a third image component (e.g., Cr component), respectively.
1: the second component, the first component, and the third component of the coordinate axes are mapped to the first image component, the second image component, and the third image component, respectively.
2: the third component, the second component, and the first component of the coordinate axes are mapped to the first image component, the second image component, and the third image component, respectively.
3: the first component, the third component, and the second component of the coordinate axes are mapped to the first image component, the second image component, and the third image component, respectively.
4: the second component, the third component, and the first component of the coordinate axes are mapped to the first image component, the second image component, and the third image component, respectively.
5: the third component, the first component, and the second component of the coordinate axes are mapped to the first image component, the second image component, and the third image component, respectively.

In a case that displacementCoordinateSystemMapIdc is updated in the sequence level, the syntax having the configuration of FIG. 7 is used. Set asps_vdmc_ext_displacement_coordinate_system_map_flag to the value of displacementCoordinateSystemMapIdc.

In a case that displacementCoordinateSystemMapIdc is updated in the picture/frame level, the syntax having the configuration in FIG. 8 is used. Set afps_vdmc_ext_displacement_coordinate_system_map_flag to the value of displacementCoordinateSystemMapIdc.

In a case that displacementCoordinateSystemMapIdc is updated in the tile/patch level, the syntax having the configuration of FIG. 9 is used. Set pid_displacement_coordinate_system_map_flag to the value of displacementCoordinateSystemMapIdc.

The image coder 1075 codes the image in the YCbCr format including the quantized mesh displacement image to output a mesh displacement image coding stream. The coding scheme to be used includes VVC, HEVC, and the like.

As described above, the coordinate system conversion parameters and/or the displacement mapping parameters are configured to be switchable in the sequence level, the picture/frame level, or the tile/patch level, allowing the selection of the optimal coordinate system and the selection of the image packing in accordance with the characteristics of the 3D data. Therefore, the 3D data can be coded or decoded with high quality.

The embodiment of the present invention has been described in detail above referring to the drawings, but the specific configuration is not limited to the above embodiment and various amendments can be made to a design that fall within the scope that does not depart from the gist of the present invention.

Application Examples

The above-mentioned 3D data coding apparatus 11 and 3D data decoding apparatus 31 can be utilized being installed to various apparatuses performing transmission, reception, recording, and regeneration of the 3D data. Note that, the 3D data may be a natural 3D data imaged by camera or the like, or may be an artificial 3D data (including CG and GUI) generated by computer or the like.

The embodiment of the present invention is not limited to the above-described embodiment, and various modifications are possible within the scope of the claims. That is, an embodiment obtained by combining technical means modified appropriately within the scope of the claims is also included in the technical scope of the present invention.

Industrial Applicability

The embodiments of the present invention can be preferably applied to an 3D data decoding apparatus that decodes coded data in which 3D data is coded, and an 3D data coding apparatus that generates coded data in which 3D data is coded. The embodiments of the present invention can be preferably applied to a data structure of coded data generated by the 3D data coding apparatus and referred to by the 3D data decoding apparatus.

Reference Signs List

11 3D data coding apparatus
101 Atlas information coder
103 Base mesh coder
1031 Mesh coder
1032 Mesh decoder
1033 Motion information coder
1034 Motion information decoder
1035 Mesh motion compensation unit
1036 Reference mesh memory
1037 Switch
1038 Switch
104 Base mesh decoder
106 Mesh displacement updater
107 Mesh displacement coder
1071 Coordinate system conversion unit
1072 Transform unit
1073 Quantization unit
1074 Displacement mapping unit
1075 Image coder
108 Mesh displacement decoder
109 Mesh reconstruction unit

110 Attribute transferrer

111 Padder

112 Color space converter

113 Attribute coder

114 Multiplexer

115 Mesh separator

1151 Mesh decimation unit

1152 Mesh subdivision unit

1153 Mesh displacement derivation unit

21 Network

31 3D data decoding apparatus

301 Demultiplexer

302 Atlas information decoder

303 Base mesh decoder

3031 Mesh decoder

3032 Motion information decoder

3033 Mesh motion compensation unit

3034 Reference mesh Memory

3035 Switch

3036 Switch

305 Mesh displacement decoder

3051 Image decoder

3052 Displacement unmapping unit

3053 Inverse quantization unit

3054 Inverse transform processing unit

3055 Coordinate system conversion unit

307 Mesh reconstruction unit

306 Attribute decoder

3071 Mesh subdivision unit

3072 Mesh deformation unit

308 Color space converter

41 3D data display apparatus

## Claims

1. A 3D data decoding apparatus for decoding coded data, the 3D data decoding apparatus comprising:

   an image decoder configured to decode the coded data into a mesh displacement image;
   a displacement unmapping unit configured to generate a mesh displacement from the mesh displacement image; and
   a coordinate system conversion unit configured to convert a coordinate system of the mesh displacement.

2. The 3D data decoding apparatus according to claim 1, wherein
   the displacement unmapping unit generates the mesh displacement, based on information for mapping an image component of the mesh displacement image to a coordinate component of the mesh displacement.

3. The 3D data decoding apparatus according to claim 1 or 2, wherein
   the coordinate system conversion unit converts the coordinate system of the mesh displacement, based on information for indicating the coordinate system of the mesh displacement.

4. A 3D data coding apparatus for coding 3D data, the 3D data coding apparatus comprising:

   a coordinate system conversion unit configured to convert a coordinate system of a mesh displacement;
   a displacement mapping unit configured to generate a mesh displacement image from the mesh displacement; and
   an image coder configured to code the mesh displacement image.

**5.** The 3D data coding apparatus according to claim 4, wherein
the displacement mapping unit generates the mesh displacement image, based on information for mapping an image component of the mesh displacement image to a coordinate component of the mesh displacement.

**6.** The 3D data coding apparatus according to claim 4 or 5, wherein
the coordinate system conversion unit converts the coordinate system of the mesh displacement, based on information for indicating the coordinate system of the mesh displacement.

3D DATA CODING APPARATUS
11

3D DATA DECODING APPARATUS
31

3D DATA DISPLAY APPARATUS
41

T

Te

Te

Td

21

1

FIG. 1

FIG. 2

EP 4 322 110 A1

FIG. 3

*303*

BASE MESH DECODER

*3031*

MESH
DECODER

BASE MESH
CODING STREAM

*3035*

*3036*

BASE
MESH

*3032*

MOTION
INFORMATION
DECODER

*3033*

MESH MOTION
COMPENSATION UNIT

*3034*

REFERENCE
MESH MEMORY

# FIG. 4

FIG. 5

307

MESH RECONSTRUCTION UNIT

3071

BASE MESH → MESH SUBDIVISION UNIT →

3072

MESH DEFORMATION UNIT → MESH

MESH DISPLACEMENT

FIG. 6

| atlas_sequence_parameter_set_rbsp( ) { | Descriptor |
|---|---|
| asps_atlas_frame_parameter_set_id | ue(v) |
| ... | |
| asps_extension_present_flag | u(1) |
| if( asps_extension_present_flag ) { | |
| asps_miv_extension_present_flag | u(1) |
| asps_vpcc_extension_present_flag | u(1) |
| asps_vdmc_extension_present_flag | u(1) |
| asps_extension_5bits | u(5) |
| } | |
| ... | |
| if( asps_vdmc_extension_present_flag ) | |
| asps_vdmc_extension( ) | |
| ... | |
| } | |

| asps_vdmc_extension( ) { | Descriptor |
|---|---|
| asps_vdmc_ext_displacement_coordinate_system_update_flag | u(1) |
| if ( asps_vdmc_ext_displacement_coordinate_system_update_flag ) | |
| asps_vdmc_ext_displacement_coordinate_system | u(3) |
| asps_vdmc_ext_displacement_coordinate_system_map_flag | u(1) |
| if ( asps_vdmc_ext_displacement_coordinate_system_map_flag ) | |
| asps_vdmc_ext_displacement_coordinate_system_map_idc | u(3) |
| } | |

# FIG. 7

EP 4 322 110 A1

| atlas_frame_parameter_set_rbsp( ) { | Descriptor |
|---|---|
| afps_atlas_frame_parameter_set_id | ue(v) |
| ... | |
| afps_extension_present_flag | u(1) |
| if( afps_extension_present_flag ) { | |
| afps_miv_extension_present_flag | u(1) |
| afps_vpcc_extension_present_flag | u(1) |
| afps_vdmc_extension_present_flag | u(1) |
| afps_extension_5bits | u(5) |
| } | |
| ... | |
| if( asps_vdmc_extension_present_flag ) | |
| afps_vdmc_extension( ) | |
| ... | |
| } | |

| afps_vdmc_extension( ) { | Descriptor |
|---|---|
| afps_vdmc_ext_displacement_coordinate_system_update_flag | u(1) |
| if ( afps_vdmc_ext_displacement_coordinate_system_update_flag ) | |
| afps_vdmc_ext_displacement_coordinate_system | u(3) |
| afps_vdmc_ext_displacement_coordinate_system_map_flag | u(1) |
| if ( afps_vdmc_ext_displacement_coordinate_system_map_flag ) | |
| afps_vdmc_ext_displacement_coordinate_system_map_idc | u(3) |
| } | |

# FIG. 8

EP 4 322 110 A1

| patch_information_data( tileID, patchIdx, patchMode ) { | Descriptor |
|---|---|
|   if( ath_type == P_TILE ) { | |
|     ... | |
|     else if ( patchMode == I_MESH ) | |
|       mesh_intra_patch_data_unit( tileID, patchIdx ) | |
|     else if ( patchMode == P_MESH ) | |
|       mesh_inter_patch_data_unit( tileID, patchIdx ) | |
|     ... | |
|   } else if( ath_type == I_TILE ) { | |
|     ... | |
|     else if ( patchMode == I_MESH ) | |
|       mesh_intra_patch_data_unit( tileID, patchIdx ) | |
|     ... | |
|   } | |
|   **pid_displacement_coordinate_system_update_flag** [ tileID ][ patchIdx ] | u(1) |
|   **pid_displacement_coordinate_system_map_flag** [ tileID ][ patchIdx ] | u(1) |
|   if ( pid_displacement_coordinate_system_update_flag [ tileID ][ patchIdx ] ) | |
|     **pid_displacement_coordinate_system** [ tileID ][ patchIdx ] | u(3) |
|   if ( pid_displacement_coordinate_system_map_flag [ tileID ][ patchIdx ] ) | |
|     **pid_displacement_coordinate_system_map_idc** [ tileID ][ patchIdx ] | u(3) |
| } | |

# FIG. 9

EP 4 322 110 A1

Y Qdisp[0]      Cb Qdisp[1]      Cr Qdisp[2]

| MESH DISPLACEMENT 3-DIMENSIONAL VECTOR FIRST COMPONENT | MESH DISPLACEMENT 3-DIMENSIONAL VECTOR SECOND COMPONENT | MESH DISPLACEMENT 3-DIMENSIONAL VECTOR THIRD COMPONENT |

(a) IN CASE OF displacementCoordinateSystemMapIdc = 0

Y Qdisp[0]      Cb Qdisp[1]      Cr Qdisp[2]

| MESH DISPLACEMENT 3-DIMENSIONAL VECTOR SECOND COMPONENT | MESH DISPLACEMENT 3-DIMENSIONAL VECTOR FIRST COMPONENT | MESH DISPLACEMENT 3-DIMENSIONAL VECTOR THIRD COMPONENT |

(b) IN CASE OF displacementCoordinateSystemMapIdc = 1

Y Qdisp[0]      Cb Qdisp[1]      Cr Qdisp[2]

| MESH DISPLACEMENT 3-DIMENSIONAL VECTOR THIRD COMPONENT | MESH DISPLACEMENT 3-DIMENSIONAL VECTOR SECOND COMPONENT | MESH DISPLACEMENT 3-DIMENSIONAL VECTOR FIRST COMPONENT |

(c) IN CASE OF displacementCoordinateSystemMapIdc = 2

Y Qdisp[0]      Cb Qdisp[1]      Cr Qdisp[2]

| MESH DISPLACEMENT 3-DIMENSIONAL VECTOR FIRST COMPONENT | MESH DISPLACEMENT 3-DIMENSIONAL VECTOR THIRD COMPONENT | MESH DISPLACEMENT 3-DIMENSIONAL VECTOR SECOND COMPONENT |

(d) IN CASE OF displacementCoordinateSystemMapIdc = 3

Y Qdisp[0]      Cb Qdisp[1]      Cr Qdisp[2]

| MESH DISPLACEMENT 3-DIMENSIONAL VECTOR SECOND COMPONENT | MESH DISPLACEMENT 3-DIMENSIONAL VECTOR THIRD COMPONENT | MESH DISPLACEMENT 3-DIMENSIONAL VECTOR FIRST COMPONENT |

(e) IN CASE OF displacementCoordinateSystemMapIdc = 4

Y Qdisp[0]      Cb Qdisp[1]      Cr Qdisp[2]

| MESH DISPLACEMENT 3-DIMENSIONAL VECTOR THIRD COMPONENT | MESH DISPLACEMENT 3-DIMENSIONAL VECTOR FIRST COMPONENT | MESH DISPLACEMENT 3-DIMENSIONAL VECTOR SECOND COMPONENT |

(f) IN CASE OF displacementCoordinateSystemMapIdc = 5

# FIG. 10

(a) BASE MESH

(b) SUBDIVIDED MESH

(c) DEFORMED MESH

○ : VERTEX

↗ : MESH DISPLACEMENT

# FIG. 11

## FIG. 12

FIG. 13

MESH DISPLACEMENT CODER — 107

MESH DISPLACEMENT →

COORDINATE SYSTEM CONVERSION UNIT — 1071 → TRANSFORM UNIT — 1072 → QUANTIZATION UNIT — 1073 → DISPLACEMENT MAPPING UNIT — 1074 → IMAGE CODER — 1075 → MESH DISPLACEMENT CODING STREAM

FIG. 14

EP 4 322 110 A1

**MESH SEPARATOR** — 115

MESH → MESH DECIMATION UNIT (1151) → BASE MESH

MESH SUBDIVISION UNIT (1152)

MESH DISPLACEMENT DERIVATION UNIT (1153) → MESH DISPLACEMENT

**FIG. 15**

(a) MESH

(b) BASE MESH

(c) SUBDIVIDED MESH

(d) MESH DISPLACEMENT

○ : VERTEX

↗ : MESH DISPLACEMENT

# FIG. 16

| atlas_sequence_parameter_set_rbsp( ) { | Descriptor |
|---|---|
| asps_atlas_frame_parameter_set_id | ue(v) |
| ... | |
| asps_extension_present_flag | u(1) |
| if( asps_extension_present_flag ) { | |
| asps_miv_extension_present_flag | u(1) |
| asps_vpcc_extension_present_flag | u(1) |
| asps_vdmc_extension_present_flag | u(1) |
| asps_extension_5bits | u(5) |
| } | |
| ... | |
| if( asps_vdmc_extension_present_flag ) | |
| asps_vdmc_extension( ) | |
| ... | |
| } | |

| asps_vdmc_extension( ) { | Descriptor |
|---|---|
| asps_vdmc_ext_displacement_coordinate_system_update_flag | u(1) |
| if ( asps_vdmc_ext_displacement_coordinate_system_update_flag ) | |
| asps_vdmc_ext_displacement_coordinate_system | u(3) |
| if (asps_vdmc_ext_displacement_coordinate_system == 0 ) { | |
| asps_vdmc_ext_displacement_coordinate_system_map_flag | u(1) |
| if ( asps_vdmc_ext_displacement_coordinate_system_map_flag ) | |
| asps_vdmc_ext_displacement_coordinate_system_map_idc | u(3) |
| } | |
| } | |

# FIG. 17

Europäisches
Patentamt

European
Patent Office

Office européen
des brevets

# EUROPEAN SEARCH REPORT

Application Number

EP 23 15 0296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNGSUN KIM (APPLE) ET AL: "Support of the V3C framework in VDMC-TM", 139. MPEG MEETING; 20220718 - 20220722; ONLINE; (MOTION PICTURE EXPERT GROUP OR ISO/IEC JTC1/SC29/WG11), , no. m60363 21 July 2022 (2022-07-21), XP030303768, Retrieved from the Internet: URL:https://dms.mpeg.expert/doc_end_user/documents/139_OnLine/wg11/m60363-v4-m60363_VDMC.zip m60363_VDMC.docx [retrieved on 2022-07-21] * pages 1-15; figure 1 * | 1-6 | INV. G06T9/00 H04N19/597 H04N19/70 |
| X | YASUAKI TOKUMO ET AL: "[V-DMC] Report of experiments coordinate system for displacements", 139. MPEG MEETING; 20220718 - 20220722; ONLINE; (MOTION PICTURE EXPERT GROUP OR ISO/IEC JTC1/SC29/WG11), , no. m60215 18 July 2022 (2022-07-18), XP030303546, Retrieved from the Internet: URL:https://dms.mpeg.expert/doc_end_user/documents/139_OnLine/wg11/m60215-v3-m60215_V-DMC_disp_coordinates_v3.zip m60215_V-DMC_disp_coordinates_v3.docx [retrieved on 2022-07-18] * pages 1-5 * | 1-6 | TECHNICAL FIELDS SEARCHED (IPC) H04N G06T |

The present search report has been drawn up for all claims

| Place of search | Date of completion of the search | Examiner |
|---|---|---|
| Munich | 8 August 2023 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)